# EUROPEAN PATENT APPLICATION

(11) **EP 4 676 047 A1**
(43) Date of publication of application: **07.01.2026**
(21) Application number: 24763243.3
(22) Date of filing: 01.03.2024
(51) Int. Cl.: H04N 19/124, G06N 3/02

(54) **IMAGE DECODING AND ENCODING METHOD AND APPARATUS, DEVICE, AND STORAGE MEDIUM**

(30) Priority: 01.03.2023 CN 202310209226
(71) Applicant: Hangzhou Hikvision Digital Technology Co., Ltd., Hangzhou 310051 (CN)
(72) Inventor: YIN, Shiying, Hangzhou, Zhejiang 310051 (CN); CHEN, Fangdong, Hangzhou, Zhejiang 310051 (CN); WANG, Li, Hangzhou, Zhejiang 310051 (CN); WU, Xiaoyang, Hangzhou, Zhejiang 310051 (CN)
(74) Representative: Michalski Hüttermann & Partner Patentanwälte mbB
(86) International application number: PCT/CN2024/079529
(87) International publication number: WO 2024/179563

(57) **Abstract**

The present disclosure relates to the technical field of image processing and discloses an image decoding and encoding method and apparatus, a device and a storage medium. In the present disclosure, feature channel distinguishing information and/or spatial point distinguishing information are obtained, and image code streams are decoded to obtain quantized residual values; an inverse quantization precision parameter value is set for each quantized residual value according to the feature channel distinguishing information and/or the spatial point distinguishing information; inverse quantization is performed on the quantization residual values according to the inverse quantization precision parameter values to obtain reconstructed residual values; synthetic transformation is performed on the reconstructed residual values to obtain a reconstructed image block. Since corresponding inverse quantization precision parameter values are constructed based on the feature channel distinguishing information and/or the spatial point distinguishing information for inverse quantization, during the encoding process, different quantization parameter values can also be set according to the different feature channels and spatial point image textures, such that more important features are subject to smaller quantization losses, which improves the performance of encoding and decoding.

## Description

### TECHNICAL FIELD

The present disclosure relates to the field of image processing technology, particularly to methods and apparatuses for image decoding and encoding, devices, and storage media.

### BACKGROUND

The end-to-end image encoding and decoding technology generally includes modules such as an analysis transformation network, a synthesis transformation network, context-based prediction, quantization, entropy encoding, a super encoding network, and a super-scale decoding network. Quantization is a "many to one" mapping process that can cause signal loss. Quantization can be applied to residuals, and can change the value range of the signal, enabling the encoder to provide a good approximation of the original signal using a small number of symbols, thereby improving the compression ratio. However, in most cases, the quantization module does not take into account the differences in feature channels and image textures during quantization, which limits the performance of the quantizer.

The above content is provided solely to facilitate understanding of the technical solutions of the present disclosure and does not constitute an admission that the above content forms part of the prior art.

### SUMMARY

The main objective of the present disclosure is to provide methods and apparatuses for image decoding and encoding, devices, and storage media, aimed at solving the technical problem of poor quantizer performance in the image encoding and decoding process in the prior art.

To achieve the above objective, the present disclosure provides a method for image decoding including:
obtaining feature channel differentiation information and/or spatial point differentiation information, and decoding a picture bitstream to obtain quantized residual values;
constructing dequantization precision parameters respectively corresponding to the quantized residual values based on the feature channel differentiation information and/or the spatial point differentiation information;
for any one of the quantized residual values, performing dequantization on the quantized residual value based on the dequantization precision parameter corresponding to the quantized residual value, to obtain reconstructed residual values; and
performing a synthesis transform on the reconstructed residual values to obtain a reconstructed picture block.

In an embodiment of the present disclosure, decoding the picture bitstream to obtain the quantized residual values includes:
extracting coding distribution parameters from a first picture bitstream;
decoding the coding distribution parameters to obtain probability distribution parameters;
quantizing the probability distribution parameters to obtain distribution quantization parameters; and
decoding a second picture bitstream based on the distribution quantization parameters to obtain the quantized residual values.

In an embodiment of the present disclosure, quantizing the probability distribution parameters to obtain the distribution quantization parameters includes:
constructing probability quantization parameters based on the feature channel differentiation information and/or the spatial point differentiation information; and
quantizing the probability distribution parameters based on the probability quantization parameters to obtain the distribution quantization parameters.

In an embodiment of the present disclosure, obtaining the feature channel differentiation information and/or the spatial point differentiation information includes:
decoding a picture bitstream to obtain the feature channel differentiation information and/or the spatial point differentiation information.

In an embodiment of the present disclosure, the picture bitstream further includes a third picture bitstream, where the third picture bitstream is configured to transmit differentiation information; and
obtaining the feature channel differentiation information and/or the spatial point differentiation information includes:
decoding the third picture bitstream to obtain the feature channel differentiation information and/or the spatial point differentiation information.

In an embodiment of the present disclosure, constructing the dequantization precision parameters respectively corresponding to the quantized residual values based on the feature channel differentiation information and/or the spatial point differentiation information includes:
extracting quantization steps respectively corresponding to categories of feature channels from the feature channel differentiation information; and
constructing the dequantization precision parameters respectively corresponding to the quantized residual values based on the quantization steps.

In an embodiment of the present disclosure, constructing the dequantization precision parameters respectively corresponding to the quantized residual values based on the feature channel differentiation information and/or the spatial point differentiation information includes:
extracting quantization steps respectively corresponding to categories of spatial points from the spatial point differentiation information; and
constructing the dequantization precision parameters respectively corresponding to the quantized residual values based on the quantization steps.

In an embodiment of the present disclosure, constructing the dequantization precision parameters respectively corresponding to the quantized residual values based on the feature channel differentiation information and/or the spatial point differentiation information includes:
reading partitioned categories of spatial points from the spatial point differentiation information;
reading quantization steps respectively corresponding to categories of feature channels in each of the categories of spatial points from the feature channel differentiation information; and
constructing the dequantization precision parameters respectively corresponding to the quantized residual values based on the quantization steps.

In an embodiment of the present disclosure, constructing the dequantization precision parameters respectively corresponding to the quantized residual values based on the quantization steps includes:
decoding a picture bitstream to obtain probability distribution parameters;
extracting parameter interval thresholds from the feature channel differentiation information; and
constructing the dequantization precision parameters respectively corresponding to the quantized residual values based on the probability distribution parameters, the quantization steps, and the parameter interval thresholds.

In an embodiment of the present disclosure, constructing the dequantization precision parameters respectively corresponding to the quantized residual values based on the feature channel differentiation information and/or the spatial point differentiation information includes:
extracting picture block information and parameter setting rules corresponding to each feature channel from the feature channel differentiation information;
decoding a picture bitstream to obtain probability distribution parameters;
calculating a distribution parameter mean corresponding to each picture block information based on the probability distribution parameters;
matching the distribution parameter mean with the parameter setting rules to obtain a quantization step corresponding to each picture block information; and
constructing the dequantization precision parameters respectively corresponding to the quantized residual values based on the quantization steps.

In an embodiment of the present disclosure, constructing the dequantization precision parameters respectively corresponding to the quantized residual values based on the feature channel differentiation information and/or the spatial point differentiation information includes:
parsing the feature channel differentiation information; and for any one of the quantized residual values, obtaining segmented step size sets respectively corresponding to categories of feature channels, where the segmented step size set corresponding to one of the categories of feature channels includes different quantization steps;
extracting, from the segmented step size set corresponding to one of the categories of feature channels, the quantization step corresponding to a channel segment to which the quantized residual value belongs; and
constructing the dequantization precision parameter corresponding to the quantized residual value based on the quantization step.

In addition, to achieve the above objective, the present disclosure further proposes a method for image encoding, including:
performing an analysis transform on a to-be-processed picture block to obtain picture features;
performing residual calculation on the picture features to obtain picture residual values and probability distribution parameters;
constructing quantization precision parameters respectively corresponding to the picture residual values based on feature channel differentiation information and/or spatial point differentiation information;
performing quantization on the picture residual values based on the quantization precision parameters to obtain quantized residual values; and
writing the probability distribution parameters and the quantized residual values into a picture bitstream.

In an embodiment of the present disclosure, writing the probability distribution parameters and the quantized residual values into the picture bitstream includes:
writing the probability distribution parameters into a first picture bitstream;
constructing distribution quantification parameters based on the probability distribution parameters; and
writing the quantized residual values into a second picture bitstream based on the distribution quantization parameters.

In an embodiment of the present disclosure, constructing the distribution quantification parameters based on the probability distribution parameters includes:
constructing probability quantization parameters based on the feature channel differentiation information and/or the spatial point differentiation information; and
quantizing the probability distribution parameters based on the probability quantization parameters to obtain the distribution quantization parameters.

In an embodiment of the present disclosure, the method for image encoding further includes:
writing the feature channel differentiation information and/or the spatial point differentiation information into a picture bitstream.

In an embodiment of the present disclosure, the picture bitstream further includes a third picture bitstream, where the third picture bitstream is configured to transmit differentiation information; and
after writing the quantized residual values into the second picture bitstream based on the distribution quantization parameters, the method further includes:
writing the feature channel differentiation information and/or the spatial point differentiation information into a third picture bitstream.

In an embodiment of the present disclosure, constructing the quantization precision parameters respectively corresponding to the picture residual values based on the feature channel differentiation information and/or the spatial point differentiation information includes:
extracting quantization steps respectively corresponding to categories of feature channels from the feature channel differentiation information; and
constructing the quantization precision parameters respectively corresponding to the picture residual values based on the quantization steps.

In an embodiment of the present disclosure, constructing the quantization precision parameters respectively corresponding to the picture residual values based on the quantization steps includes:
extracting parameter interval thresholds from the feature channel differentiation information; and
constructing the quantization precision parameters respectively corresponding to the picture residual values based on the probability distribution parameters, the parameter interval thresholds, and the quantization steps.

In an embodiment of the present disclosure, constructing the quantization precision parameters respectively corresponding to the picture residual values based on the feature channel differentiation information and/or the spatial point differentiation information includes:
parsing the feature channel differentiation information;
for any one of the picture residual values,
obtaining segmented step size sets respectively corresponding to categories of feature channels, where the segmented step size set corresponding to one of the categories of feature channels includes different quantization steps;
extracting, from the segmented step size set corresponding to one of the categories of feature channels, the quantization step corresponding to a channel segment to which the picture residual value belongs; and
constructing the quantization precision parameter corresponding to the picture residual value based on the quantization step.

In an embodiment of the present disclosure, constructing the quantization precision parameters respectively corresponding to the picture residual values based on the feature channel differentiation information and/or the spatial point differentiation information includes:
extracting quantization steps respectively corresponding to categories of spatial points from the spatial point differentiation information; and
constructing the quantization precision parameters respectively corresponding to the picture residual values based on the quantization steps.

In an embodiment of the present disclosure, constructing the quantization precision parameters respectively corresponding to the picture residual values based on the feature channel differentiation information and/or the spatial point differentiation information includes:
reading partitioned categories of spatial points from the spatial point differentiation information;
reading quantization steps respectively corresponding to categories of feature channels in each of the categories of spatial points from the feature channel differentiation information; and
constructing the quantization precision parameters respectively corresponding to the picture residual values based on the quantization steps.

In an embodiment of the present disclosure, writing the probability distribution parameters and the quantized residual values into the picture bitstream includes:
performing picture decoding based on the probability distribution parameters, the quantized residual values, and the feature channel differentiation information, to obtain a reconstructed picture block and a picture bitrate;
adjusting the feature channel differentiation information and/or the spatial point differentiation information based on the reconstructed picture block and the picture bitrate;
if the current adjustment rounds are greater than or equal to preset adjustment rounds, writing the probability distribution parameters and the quantized residual values into a picture bitstream.

In an embodiment of the present disclosure, after adjusting the feature channel differentiation information and/or the spatial point differentiation information based on the reconstructed picture block and the picture bitrate, the method further include:
if the current adjustment rounds are less than the preset adjustment rounds, returning to the step of constructing quantization precision parameters respectively corresponding to the feature channels according to the feature channel differentiation information.

In addition, to achieve the above objective, the present disclosure further proposes an apparatus for image decoding, including:
an entropy decoding module, configured to obtain feature channel differentiation information and/or spatial point differentiation information, and decode a picture bitstream to obtain quantized residual values;
a parameter construction module, configured to construct dequantization precision parameters respectively corresponding to the quantized residual values based on the feature channel differentiation information and/or the spatial point differentiation information;
a dequantization module, configured to, for any one of the quantized residual values, perform dequantization on the quantized residual value based on the dequantization precision parameter corresponding to the quantized residual value, to obtain reconstructed residual values; and
a synthesis transformation module, configured to perform a synthesis transform on the reconstructed residual values to obtain a reconstructed picture block.

In addition, to achieve the above objective, the present disclosure further proposes an image encoding device, including:
an analysis transformation module, configured to perform an analysis transform on a to-be-processed picture block to obtain picture features;
a residual calculation module, configured to perform residual calculation on the picture features to obtain picture residual values and probability distribution parameters;
a parameter construction module, configured to construct quantization precision parameters respectively corresponding to feature channels based on feature channel differentiation information and/or spatial point differentiation information;
a quantization module, configured to perform quantization on the picture residual values based on the quantization precision parameters to obtain quantized residual values; and
an entropy encoding module, configured to write the probability distribution parameters and the quantized residual values into a picture bitstream.

In addition, to achieve the above objective, the present disclosure further proposes a decoding device, including one or more processors, a memory, and a decoding program stored on the memory and runnable on the one or more processors, where the one or more processors execute the decoding program to implement the method for image decoding described above.

In addition, to achieve the above objective, the present disclosure further proposes an encoding device, including one or more processors, a memory, and an encoding program stored on the memory and runnable on the one or more processors, where the one or more processors execute the encoding program to implement the method for image encoding described above.

In addition, to achieve the above objective, the present disclosure further proposes a computer-readable storage medium, storing an image decoding program and/or an image encoding program;
where when the image decoding program is executed, the method for image decoding described above is implemented, or when the image encoding program is executed, the method for image encoding described above is implemented.

In the present disclosure, the feature channel differentiation information and/or the spatial point differentiation information is obtained, and a picture bitstream is decoded to obtain quantized residual values; dequantization precision parameters respectively corresponding to the quantized residual values are constructed based on the feature channel differentiation information and/or the spatial point differentiation information; dequantization is performed on the quantized residual values based on the dequantization precision parameters to obtain the reconstructed residual values; and synthesis transform is performed on the reconstructed residual values to obtain the reconstructed picture block. Since the corresponding dequantization parameters are constructed according to the feature channel differentiation information and/or the spatial point differentiation information for dequantization, different quantization parameters can be set in the encoding process according to differences in feature channels and/or spatial point picture texture, which allows more important features to incur smaller quantization losses, thereby improving the performance of encoding and decoding.

### BRIEF DESCRIPTION OF DRAWINGS

FIG. 1 is a schematic structural diagram of an electronic device of a hardware operating environment involved in the embodiments of the present disclosure.
FIG. 2 is a flowchart of a method for image decoding according to a first embodiment of the present disclosure.
FIG. 3 is a schematic diagram of image encoding and decoding processes according to an embodiment of the present disclosure.
FIG. 4 is a schematic diagram of feature channels according to an embodiment of the present disclosure.
FIG. 5 is a two-dimensional schematic diagram of average values of probability distribution parameters of feature channels in an embodiment of the present disclosure.
FIG. 6 is a flowchart of a method for image decoding according to a second embodiment of the present disclosure.
FIG. 7 is a schematic diagram of a decoding process of an embodiment of the present disclosure.
FIG. 8 is a flowchart of a method for image decoding according to a third embodiment of the present disclosure.
FIG. 9 is a schematic diagram of a flag matrix according to an embodiment of the present disclosure.
FIG. 10 is a schematic diagram of row and column division according to an embodiment of the present disclosure.
FIG. 11 is a flowchart of a method for image decoding according to a fourth embodiment of the present disclosure.
FIG. 12 is a schematic diagram of spatial point classification according to an embodiment of the present disclosure.
FIG. 13 is a flowchart of a method for image encoding according to a first embodiment of the present disclosure.
FIG. 14 is a schematic diagram of an image encoding process according to an embodiment of the present disclosure.
FIG. 15 is a flowchart of a method for image encoding according to a second embodiment of the present disclosure.
FIG. 16 is a flowchart of a method for image encoding according to a third embodiment of the present disclosure.
FIG. 17 is a schematic diagram of an operating process of an optimal threshold mode flag according to an embodiment of the present disclosure.
FIG. 18 is a flowchart of parameter optimization according to an embodiment of the present disclosure.
FIG. 19 is a structural block diagram of an apparatus for image decoding according to a first embodiment of the present disclosure.
FIG. 20 is a structural block diagram of an apparatus for image encoding according to a first embodiment of the present disclosure.

The objectives, functional characteristics, and advantages of the present disclosure will be further described in conjunction with the embodiments and with reference to the accompanying drawings.

### DETAILED DESCRIPTION

It should be understood that the specific embodiments described herein are only used to explain the present disclosure and are not intended to limit the present disclosure.

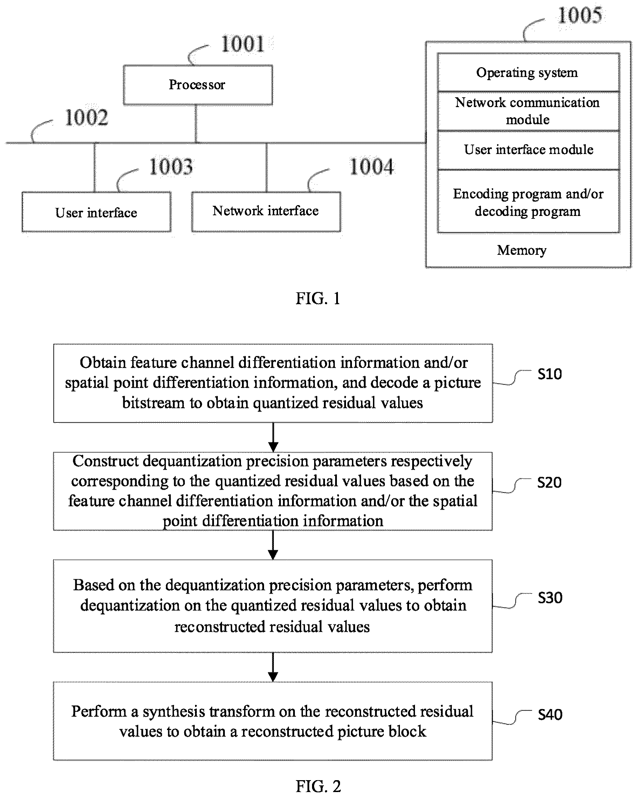

Referring to FIG. 1, FIG. 1 is a schematic structural diagram of an encoding device or a decoding device of the hardware operating environment involved in the embodiments of the present disclosure.

As shown in FIG. 1, the electronic device may include: one or more processors 1001, such as a Central Processing Unit (CPU), a communication bus 1002, a user interface 1003, a network interface 1004, and a memory 1005. The communication bus 1002 is configured to achieve connection communication between these components. The user interface 1003 may include a display, an input unit such as a keyboard, and optionally, the user interface 1003 may further include a standard wired interface and a standard wireless interface. The network interface 1004 can optionally include a standard wired interface and a standard wireless interface (such as a Wireless Fidelity (WI-FI) interface). Memory 1005 can be high-speed Random Access Memory (RAM) or stable Non-Volatile Memory (NVM), such as disk storage. Memory 1005 can optionally be a storage device independent of the aforementioned processor 1001.

Those skilled in the art can understand that the structure shown in FIG. 1 does not constitute a limitation on the electronic device. The electronic device may include more or fewer components than shown in the figure, or combine some components, or adopt different component arrangements.

As shown in FIG. 1, the memory 1005 as a storage medium may include an operating system, a network communication module, a user interface module, and an image encoding program and/or an image decoding program.

In the electronic device shown in FIG. 1, the network interface 1004 is mainly used for data communication with the network server, and the user interface 1003 is mainly used for data interaction with the user. The processor 1001 and the memory 1005 in the electronic device in the present disclosure can be set in an encoding device or a decoding device. The electronic device calls the encoding program stored in the memory 1005 through the processor 1001 and executes the image encoding method provided in the embodiments of the present disclosure, or calls the image decoding program stored in the memory 1005 through the processor 1001 and executes the method for image decoding provided in the embodiments of the present disclosure.

In some embodiments of the present disclosure, the differences in feature channels are considered to improve quantization precision and enhance the performance of the quantizer. For example, feature channels are classified based on the differences of the feature channels, and feature channels of different importance levels have different quantization precisions. Features can also be classified based on differences in texture complexity, and feature regions with different texture complexities have different quantization precisions. In the present disclosure, all information used for feature channel classification belongs to the relevant information for distinguishing feature channels. The classified features with the above information will be quantized with different accuracies, e.g., using different quantization steps, such that more important features can incur less quantization loss, making the prediction of the to-be-encoded features more accurate, and thus obtaining better feature reconstruction values y_hat, ultimately achieving the goal of obtaining better encoding performance.

The embodiments of the present disclosure provide a method for image decoding. Referring to FIG. 2, FIG. 2 is a flowchart of a method for image decoding according to a first embodiment of the present disclosure.

In this embodiment, the method for image decoding includes the following steps S10-S40.

In step S10, feature channel differentiation information and/or spatial point differentiation information is obtained, and a picture bitstream is decoded to obtain quantized residual values.

It should be noted that the executing subject of this embodiment can be the decoding device used for decoding picture data. The decoding device can be an electronic device such as a camera, mobile terminal, personal computer, server, or other devices that can achieve the same or similar functions, which is not limited in this embodiment. In this embodiment and the following embodiments, the decoding device will be used as an example to explain the method for image decoding in the present disclosure.

Where in the process of image encoding, the encoding device generally decodes the encoded picture bitstream after encoding is completed, and determines whether to adjust the parameters used in the encoding based on the picture quality of the decoded picture. Therefore, the executing subject of this embodiment can also be the encoding device.

In the embodiments of the present disclosure, some technical terms that may be involved in picture encoding or picture decoding include quantization and dequantization, scalar quantization (SQ), entropy encoding, convolutional neural network (CNN), feature channel, etc., which are explained here.

Quantization is the process of mapping continuous values (or a large number of discrete values) of signals to a finite number of discrete values, achieving a many to one mapping of signal values. In video encoding, after residual signals are transformed, transformation coefficients usually have a large dynamic range. Therefore, quantizing the transformation coefficients can effectively reduce the signal value space and achieve better compression effects. Due to the many to one mapping mechanism, the quantization process inevitably introduces distortion, which is the fundamental reason for distortion in video encoding.

Dequantization is the inverse process of quantization, which maps the quantized coefficients to the reconstructed signal in the input signal space. The reconstructed signal is an approximation of the input signal.

Scalar quantization is the most basic quantization method, which maps a continuous signal (or a signal with a large number of discrete values) into several discrete signals. Specifically, the input of the scalar quantization is a one-dimensional scalar signal. The input signal space is first divided into a series of mutually exclusive intervals, and a representative signal is selected for each interval. Then, for each input signal, scalar quantization maps the input signal to the representative signal of the section to which the input signal belongs.

The simplest scalar quantization method is uniform scalar quantization, in which the input signal space is divided into equally spaced intervals, and the representative signal of each interval is the midpoint of the interval. The interval length is referred to as the quantization step, the interval index is called the level, and the parameter that characterizes the quantization step is the quantization parameter (QP).

The optimal scalar quantizer is the Lloyd-Max quantizer, which takes into account the distribution of the input signal, where the interval dividing is non-uniform, the representative signal of each interval is the probabilistic centroid of the interval, and the boundary point between two adjacent intervals is the midpoint of the representative signals of the two intervals.

Entropy encoding refers to the encoding process that follows the principle of entropy without losing any information. Information entropy is the average amount of information (a measure of uncertainty) of a source. Common entropy encoding methods include: Shannon encoding, Huffman encoding, and arithmetic coding.

### Neural Network (NN):

The neural network refers to an artificial neural network, rather than a biological neural network. A neural network is an operational model composed of a large number of interconnected nodes (or neurons). In the neural network, neuron processing units can represent different objects, such as features, letters, concepts, or some meaningful abstract patterns. The types of processing units in the neural network are partitioned into three categories: input units, output units, and hidden units. The input units receive signals and data from the outside. The output units realize the output of processing results. The hidden units are located between the input units and the output units and cannot be observed from outside the system. The connection weight between neurons reflect the strength of the connection between units, and the representation and processing of information are reflected in the connection relationships between processing units. The neural network is a non programmed, brain like information processing method that essentially obtains a parallel distributed information processing function through the transform and dynamic behavior of the neural network, and imitates the information processing function of the nervous system of the human brain to different degrees and levels. Usually, in the field of video processing, a commonly used neural network includes: a Convolutional Neural Network (CNN), a Recurrent Neural Network (RNN), or a Fully Connected Network, etc.

The convolutional neural network is a type of feedforward neural network and is one of the most representative network structures in deep learning technology. The artificial neurons of Convolutional Neural Network can respond to surrounding units within a certain coverage area, and have excellent performance in large-scale image processing.

The basic structure of CNN network generally consists of two layers, one of which is the feature extraction layer (also referred to as the convolutional layer), and the input of each neuron is connected to a local receptive field of the previous layer and extracts the local features. Once the local feature is extracted, the positional relationship between the local feature and other features is also determined. The second layer is the feature mapping layer (also referred to as the activation layer), where each computational layer of the network consists of multiple feature maps. Each feature map is a plane, and the weights of all neurons on the plane are equal. The feature mapping structure can use Sigmoid function, ReLU function, Leaky-ReLU function, PReLU function, or GDN function, etc. as the activation function for the convolutional network. In addition, since neurons on one mapping surface share a weight, the number of free parameters in the network is reduced.

One of the advantages of the CNN over traditional image processing algorithms is that it avoids the complex pre-processing process (such as extracting artificial features) of the pictures, and can directly input the original picture for end-to-end learning. One of the advantages of the CNN compared to traditional neural networks is that traditional neural networks adopt a full connection approach, where all neurons from the input layer to the hidden layer are connected, which results in a huge number of parameters, makes network training time-consuming or even difficult. The CNN can avoid this difficulty through local connections, weight sharing, and other approaches.

In a neural network, the input signal can be processed through convolutional layers to obtain many feature maps, each of the feature maps is called a feature channel containing some information of the input signal.

It should be noted that the feature channel differentiation information can be the differentiation information for partitioning the picture feature channels into categories. The feature channel differentiation information can include the rules for partitioning the feature channels into categories, and the quantization precision parameters for quantizing the residual values corresponding to partitioned categories of feature channels. The spatial point differentiation information can be the differentiation information for partitioning points in the picture into categories. The spatial point differentiation information can include rules for partitioning spatial points in the picture into categories based on picture texture. If necessary, the spatial point differentiation information can further include the quantization precision parameters for quantizing the residual values corresponding to partitioned categories of spatial points.

Where the rules for partitioning feature channels into categories or spatial points into categories can be set based on probability distribution parameters, or based on the average value or variance of probability distribution parameters. For example, corresponding thresholds are set to obtain multiple value intervals, and feature channels are partitioned into multiple categories based on the value intervals to which the corresponding probability distribution parameters belong.

In step S20, dequantization precision parameters respectively corresponding to the quantized residual values are constructed based on the feature channel differentiation information and/or the spatial point differentiation information.

It should be noted that constructing the dequantization precision parameters respectively corresponding to quantized residual values based on the feature channel differentiation information and/or spatial point differentiation information can include: determining the categories of feature channels or categories of spatial points respectively corresponding to quantized residual values based on the feature channel differentiation information and/or spatial point information, to obtain the dequantization precision parameters that should be used when dequantization is performed on the quantized residual values.

In step S30, based on the dequantization precision parameters, dequantization is performed on the quantized residual values to obtain reconstructed residual values.

It can be understood that after the dequantization precision parameters respectively corresponding to quantized residual values are determined, the quantized residual values can be subjected to inverse processing of the quantization based on the dequantization precision parameters, e.g., dequantization is performed, and the processed values are used as the reconstructed residual values.

In step S40, a synthesis transform is performed on the reconstructed residual values to obtain a reconstructed picture block.

It should be noted that after the reconstructed residual values are obtained, the mean configured to calculate the feature residual values can be obtained through context prediction. By using the mean, the reconstructed residual values can be reconstructed into picture features, and then the picture features can be reconstructed into the picture block through a synthetic transformation network, thereby obtaining the reconstructed picture block.

It can be understood that if the encoding device partitions the picture data into only one picture block for processing during encoding, the reconstructed picture block obtained at this time is the completed reconstructed picture data corresponding to the picture data. If the encoding device partitions the picture data into multiple picture blocks for processing during encoding, the reconstructed picture block obtained in this case is only the reconstructed picture data corresponding to one picture block in the picture data.

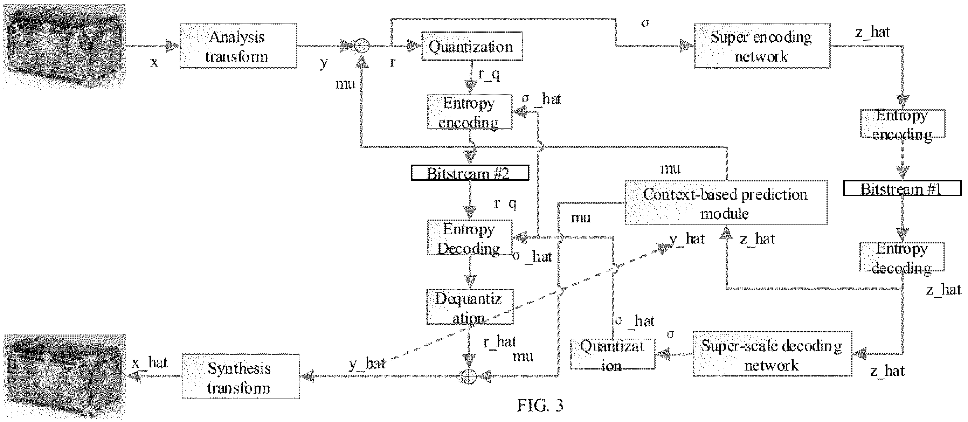

For ease of understanding, the present disclosure is explained with reference to FIGs. 3, 4, and 5, which should not be construed as limiting the scope of the present solution. FIG. 3 is a schematic diagram of the image encoding and decoding process in this embodiment. As shown in FIG. 3, the process of image encoding and decoding mainly involves modules such as analysis transformation network, synthesis transformation network, context-based prediction, quantization, entropy encoding, super encoding network, and super-scale decoding network.

The analysis transformation network: is configured to transform picture x into feature y in the latent domain, facilitating all subsequent processes in the latent domain.

Super encoding network: the probability distribution parameter σ of the residual r is inputted to obtain the hyper prior information z_ hat, where the z_ hat is written into the picture bitstream bitstream #1, mainly to pass the probability model parameter σ of the residual.

Context-based prediction module: the input of this module includes not only z_hat, but also decoded y_hat. The two are jointly fed into the module to obtain a more accurate mean value mu, where the mean value mu is the predicted value of the original feature. By adding the reconstructed residual value r_hat to mu, the reconstructed y_hat is obtained.

Super scale decoding network: the output z_ hat of the super encoding network is used as the input of the super-scale decoding network in another path to obtain the probability distribution parameter σ. After quantization, the distribution quantization parameter σ_hat is obtained. σ_hat is then used together with the second picture bitstream (Bitstream#2) to obtain the quantized residual value r_q.

Synthesis transformation module: the obtained reconstructed latent-domain feature y_hat is passed through the synthesis transform module to obtain the reconstructed picture.

Entropy encoding: a lossless encoding method based on the principle of information entropy, which converts a series of element symbols (such as transform coefficients and mode information) used to represent video sequences into a binary stream, and removes the statistical redundancy of these video element symbols.

Quantization: a "many to one" mapping process that can cause signal loss. Quantization can be applied to residuals, and can change the value range of the signal, enabling the encoder to provide a good approximation of the original signal using a small number of symbols, thereby improving the compression ratio. In addition, quantization can also applied to σ to obtain σ_hat, which allows σ_hat to better estimate the probability distribution of the quantized residual r_q. Dequantization is the inverse process of quantization, where the quantization precision parameters or dequantization precision parameters used in the quantization process or dequantization process are constructed based on feature channel differentiation information and/or spatial point differentiation information.

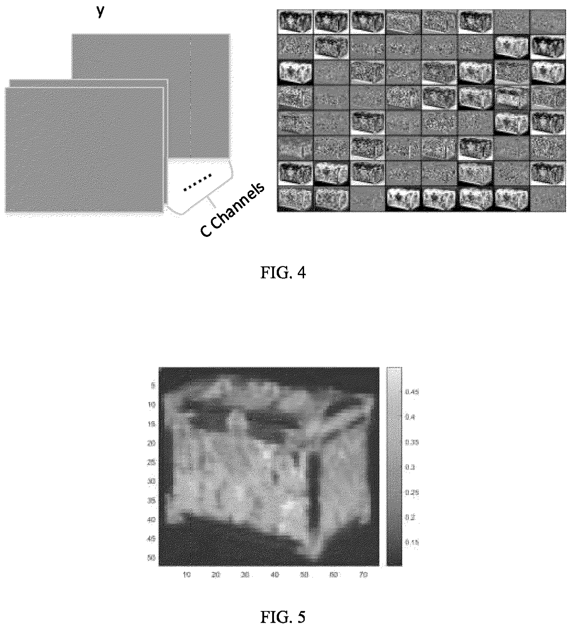

FIG. 4 is a schematic diagram of the feature channels in this embodiment, and FIG. 5 is a two-dimensional schematic diagram of the average values of probability distribution parameters of the feature channels in this embodiment. As shown in FIG. 3 above, after the picture x is processed through the analysis transformation network, the feature y contains C feature channels, and the number of C depends on the number of convolution kernels used in the analysis transformation network. As shown in FIG. 4, each feature channel contains different amounts of information. Some feature channels contain more information, almost identical to the input image, and some feature channels contain almost no information and are mostly noise. Therefore, using quantization methods with different precisions for different feature channels can help obtain better encoding performance.

In addition, averaging the σ values of all feature channels can obtain a 2D image, as shown in FIG. 5. In FIG. 5, it can be determined that some regions have higher texture values, indicating that these regions are more important. Assigning more codewords to complex texture parts of the picture can help improve encoding performance.

In the embodiments, the feature channel differentiation information and/or the spatial point differentiation information is obtained, and a picture bitstream is decoded to obtain quantized residual values; dequantization precision parameters respectively corresponding to the quantized residual values are constructed based on the feature channel differentiation information and/or the spatial point differentiation information; dequantization is performed on the quantized residual values based on the dequantization precision parameters to obtain the reconstructed residual values; and synthesis transform is performed on the reconstructed residual values to obtain the reconstructed picture block. Since the corresponding dequantization parameters are constructed according to the feature channel differentiation information and/or the spatial point differentiation information for dequantization, different quantization parameters can be set in the encoding process according to differences in feature channels and/or spatial point picture texture, which allows more important features to incur smaller quantization losses, thereby improving the performance of encoding and decoding.

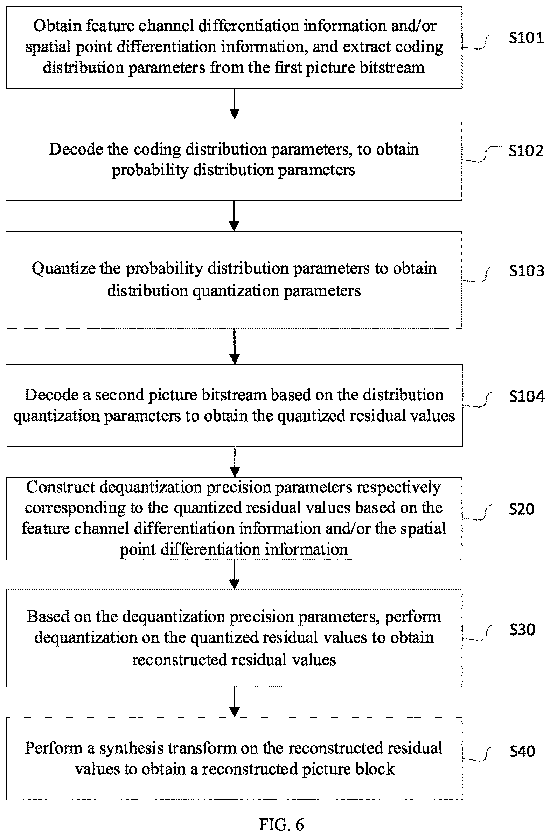

Referring to FIG. 6, FIG. 6 is a flowchart of a method for image decoding according to a second embodiment of the present disclosure.

In this embodiment, the picture bitstreams may include a first picture bitstream and a second picture bitstream, where the first picture bitstream is configured to transmit decoding auxiliary information and the second picture bitstream is configured to transmit residual data.

Based on the first embodiment described above, step S10 of the method for image decoding in this embodiment may include steps S101-104.

In step S101, feature channel differentiation information and/or spatial point differentiation information is obtained, and coding distribution parameters are extracted from the first picture bitstream.

It should be noted that extracting coding distribution parameters from the first picture bitstream can be achieved by entropy decoding the first picture bitstream, and reading the decoding auxiliary information contained in the first picture bitstream, to obtain the coding distribution parameters.

In step S102, the coding distribution parameters are decoded, to obtain probability distribution parameters.

It should be noted that decoding the coding distribution parameters to obtain the probability distribution parameters can be achieved by decoding the read decoding auxiliary information through a super-scale decoding network to obtain the probability distribution parameters.

In step S103, the probability distribution parameters are quantized to obtain distribution quantization parameters.

It should be noted that when the encoding device writes the residual data into the second picture bitstream, the encoding device encodes and writes based on the quantized probability distribution parameters. Therefore, when the second picture bitstream is decoded, it is also necessary to obtain the quantized probability distribution parameters for decoding. In this case, to ensure the normal decoding of the second picture bitstream, the probability distribution parameters can be quantized using the same method as that employed by the encoding device during encoding, to obtain the distribution quantization parameters.

In the specific implementation process, to ensure consistency between the obtained distribution quantization parameters and the parameters used by the encoding device during encoding, it is necessary to ensure that the parameters used for quantization of the probability distribution parameters are consistent with the parameters used by the encoding device during encoding. Step 103 described in this embodiment may include:
constructing probability quantization parameters based on the feature channel differentiation information and/or the spatial point differentiation information; and
quantizing the probability distribution parameters based on the probability quantization parameters to obtain the distribution quantization parameters.

It should be noted that constructing probability quantization parameters based on feature channel differentiation information and/or spatial point differentiation information can involve extracting the parameters configured to quantize probability distribution parameters from feature channel differentiation information and/or spatial point differentiation information.

In one implementation of this embodiment, to facilitate decoding by the decoding device, the encoding device may write the feature channel differentiation information and/or spatial point differentiation information used in the encoding process into the first picture bitstream or the second picture bitstream. In this case, obtaining the feature channel differentiation information and/or spatial point differentiation information can include decoding the first picture bitstream or the second picture bitstream to extract the feature channel differentiation information and/or spatial point differentiation information from the first picture bitstream or the second picture bitstream.

In one implementation of this embodiment, to avoid bitstream confusion, the encoding device may also set a third picture bitstream to transmit the feature channel differentiation information and/or spatial point differentiation information used in the encoding process through the third picture bitstream. In this case, obtaining the feature channel differentiation information and/or spatial point differentiation information can include decoding the third picture bitstream to extract the feature channel differentiation information and/or spatial point differentiation information from the third picture bitstream.

In step S104, a second picture bitstream is decoded based on the distribution quantization parameters to obtain the quantized residual values.

It should be noted that when the encoding device writes the quantized residual value into the second picture bitstream, the encoding device performs entropy encoding on the quantized residual value based on the quantized distribution quantization parameters. In this case, after the distribution quantization parameters are obtained, an inverse operation (e.g., entropy decoding) can be performed on the second picture bitstream based on the distribution quantization parameters, to obtain the quantized residual value.

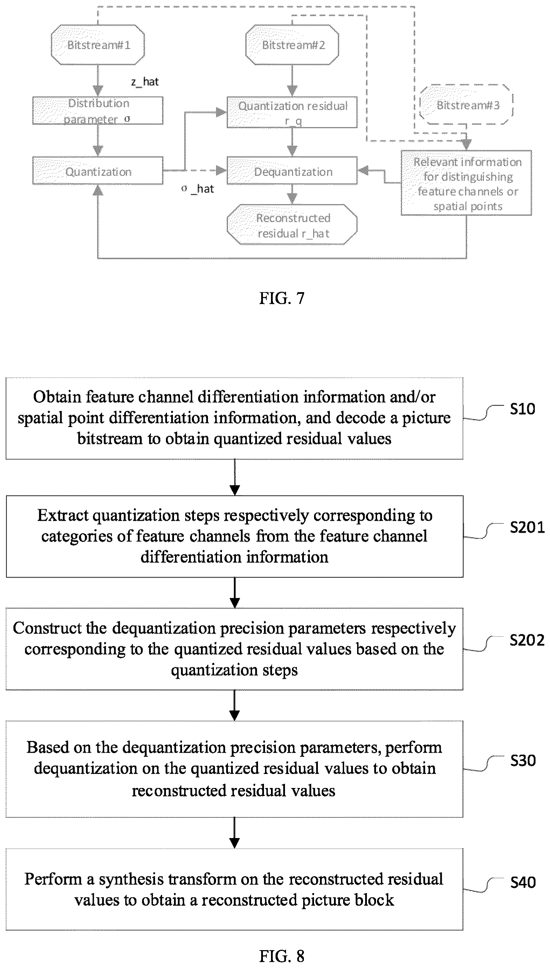

For ease of understanding, the present disclosure is explained with reference to FIG. 7, which should not be construed as limiting the scope of the present solution. FIG. 7 is a schematic diagram of the decoding process of this embodiment. As shown in FIG. 7, the decoding end receives at least two picture streams (the first picture bitstream Bitstream #1 and the second picture bitstream Bitstream # 2), and may also receive the third picture bitstream Bitstream # 3;

In this case, the decoding process includes: obtaining a z-hat by parsing from the auxiliary bitstream Bitstream #1, where the parameter σ of the probability distribution model of the residuals can be obtained through z_hat; obtaining relevant information (feature channel differentiation information and/or spatial point differentiation information) for distinguishing feature channels or texture regions, and using this information to partition feature channels into categories or spatial points into categories, where the quantization precisions of different categories of feature channels or spatial points are different, where the relevant information for distinguishing feature channels can be transmitted from the encoding device to the decoding device through Bitstream #1 or Bitstream # 2, or transmitted through a new bitstream Bitstream # 3, or pre-written into the encoding and decoding device without bitstream transmission; performing entropy decoding from Bitstream # 2, and obtaining the quantized residual r_q based on the σ_hat obtained by quantizing σ. The relevant information that distinguishes feature channels or spatial points are applied to the dequantization of the quantized residual value r_q, to enable the quantized residual values r_q and σ corresponding to different categories of feature channels or spatial points to have different quantization precisions.

Referring to FIG. 8, FIG. 8 is a flowchart of a method for image decoding according to a third embodiment of the present disclosure.

Based on the first embodiment described above, step S20 of the method for image decoding in this embodiment may include steps S201-202.

In step S201, quantization steps respectively corresponding to categories of feature channels are extracted from the feature channel differentiation information.

It should be noted that when distinguishing feature channels, feature channels can be partitioned into multiple categories, and different quantization steps can be assigned to different categories of feature channels. In this case, the feature channel differentiation information can include the rule for partitioning feature channels into categories and the corresponding quantization step of each category of feature channels.

Where the rule for partitioning feature channels into categories can be set in any one of the following methods 1-4.

Method 1: setting according to the sequence numbers of the feature channels:
setting the corresponding quantization step for the feature channel corresponding to each sequence number, and then partitioning feature channels with the same quantization step into one category. For example, if the sequence numbers of the feature channels are from 1 to X, the quantization step list of the feature channels can be: channel_list=[channel1, channel12, ..., channelX];
Furthermore, within the same feature channel, there may also be components such as luma or chroma, where the luma or chroma can be further partitioned. For example, assuming that the luma channel numbers are from 1 to X1 and the chroma channel numbers are from 1 to X2, the quantization step list for the luma channels is: channel_listY=[channel1, chanenel2, ..., channelXl], and the quantization step list for the chroma channels is: channel_listUV=[channel1, chanenel2, ..., channelX2].

Method 2: setting corresponding categories based on the channel flag list:
setting a corresponding flag for the feature channel corresponding to each sequence number; and identifying, by the flag, the category of the feature channel corresponding to each sequence number.

For example, taking the luma channel as an example, the sequence numbers of the luma channels are from 1 to 128, and the flag list is channel_listY = [flag0, flag1, ..., flag128], where the value of the flag is the category corresponding to the luma channel of that number. If there are only two categories, the value of the flag is 0 and 1.

Method 3: partitioning the categories of feature channels by setting thresholds:
setting the category of the corresponding feature channel based on thresholds derived from the probability distribution parameters σ, such as the mean value or variance of the probability distribution parameter σ, or based on relevant thresholds calculated from the quantized residual values r_q, such as the sum of absolute values of the quantized residuals or the coding rate. For example: thr_list = [thr1, thr2, ..., thrX].

Method 4: partitioning the categories feature channels based on the channel quantity: sorting the channels based on relevant threshold values derived from the distribution parameter σ, such as the mean value or variance of σ, or based on the sum of absolute values of the quantized residuals r_q or the coding rate. Multiple quantity thresholds may be set (the multiple quantity thresholds can be represented as a list, e.g., num_list = [num1, num2, ..., numX], where X denotes the length of the list, e.g., the number of quantity thresholds). According to the quantity thresholds, category partitioning is performed based on the channel quantity. For example, the top three channels after sorting may be partitioned into one category, and the remaining channels are partitioned into another category. In this case, the channel quantity threshold may be set to 3, and accordingly setting num_list = [3].

In step S202, the dequantization precision parameters respectively corresponding to the quantized residual values are constructed based on the quantization steps.

It should be noted that after obtaining the quantization step corresponding to each category of feature channel, the quantization step and other parameters used for quantization of each quantized residual value can be obtained based on the feature channel corresponding to each quantized residual value, to calculate the dequantization precision parameter required for dequantization of each quantized residual value.

For example, if the feature channels are partitioned into X categories, the quantization steps respectively corresponding to categories of feature channels in the feature channel differentiation information can be represented by the list scale_list=[scale1, scale2, ..., scaleX], where X is the number of quantization steps. In this case, assuming that for the j-th feature channel, the quantized residual value is rqj, the feature residual is rj, and the reconstructed residual value obtained by dequantization is r_hatj, then the quantization process rqj=round (rj * scalej * scalei), and the dequantization process r_hatj=rqj/(scalej * scalei), where scalej indicates the quantization step configured to quantize the feature residual corresponding to the j-th feature channel added based on the feature channel, and scalei indicates the quantization step configured to quantize the feature residual corresponding to the j-th feature channel in the original solution, where scalei can be set to 1. That is, the quantization step of the original solution may be retained or may not be retained. Similarly, in the following embodiments, it may be optionally chosen whether to retain the quantization step of the original solution.

In the specific implementation process, for the same feature channel, different quantization steps can be further set. For example, multiple value intervals may be divided by setting thresholds, and further configuration may be performed according to the value interval to which the probability distribution parameter or a value calculated based on the probability distribution parameter belongs. Step S202 in the embodiment may include:
decoding a picture bitstream to obtain probability distribution parameters;
extracting parameter interval thresholds from the feature channel differentiation information; and
constructing the dequantization precision parameters respectively corresponding to the quantized residual values based on the probability distribution parameters, the quantization steps, and the parameter interval thresholds.

It should be noted that when constructing the dequantization precision parameter corresponding to the quantized residual value, the feature channel category to which the quantized residual value belongs can be obtained first, and the quantization steps and parameter interval thresholds corresponding to this feature channel category can be obtained. Multiple value intervals can be divided according to the parameter interval thresholds, and then the value interval (which can also be the value interval of the average or variance of the probability distribution parameter) of the probability distribution parameter corresponding to the quantized residual value can be calculated. Based on the value interval, the corresponding quantization step can be selected from the multiple quantization steps corresponding to this feature channel category. Then, the dequantization precision parameter corresponding to the dequantization of the quantized residual value can be calculated according to the quantization step. Where multiple quantization steps corresponding to one feature channel category respectively correspond to the partitioned value intervals.

For example, assuming that the feature channel corresponding to the quantized residual value is category i, the quantization steps for this feature channel category includes scale1, scale2, ..., scaleN, and the parameter interval thresholds includes thr1, thr2, ..., and thrN, which are different thresholds arranged in descending order (e.g., thr1 > thr2 > ... > thrN). In this case, the value intervals can include: (thr1, ∞), (thr2, thr1], ..., (thrN, thrN-1], and value intervals respectively correspond to quantization steps. Accordingly, if the probability distribution parameter σ corresponding to the quantized residual value satisfies σ > thr1, then the quantization step corresponding to the quantized residual value is scale1; if the probability distribution parameter σ corresponding to the quantized residual value satisfies thr1 ≥ σ > thr2, then the quantization step corresponding to the quantized residual value is scale2; and so on.

In the specific implementation process, the same feature channel category can be further divided. For example, one category of feature channels is divided into multiple segments, and each segment corresponds to a different quantization step, then step S20 described in this embodiment can include:
parsing the feature channel differentiation information, to obtain a segmented step size set corresponding to each category of feature channel;
extracting the quantization step corresponding to each channel segment from the segmented step size set; and
constructing the dequantization precision parameters respectively corresponding to the quantized residual values based on the quantization steps.

It should be noted that after further dividing a category of feature channels, each category of feature channels can correspond to multiple different quantization steps, which can be stored in the form of a set. In this case, the feature channel differentiation information can be parsed to obtain the segmented step size set corresponding to each category of feature channels, and then the quantization step corresponding to each channel segment can be extracted from the segmented step size set. Where the segmentation method for different categories of feature channels may be different or the same, which is not limited in the embodiments.

In this case, constructing the dequantization precision parameter corresponding to the quantized residual value based on the quantization step can include: obtaining the category of feature channels corresponding to the quantized residual value, determining the channel segment to which the quantized residual value belongs in that category of feature channels, and determining the quantization step and other parameters configured to calculate the quantized residual value based on the category of feature channels and the channel segment, thereby calculating the dequantization precision parameter required for dequantization of the quantized residual value.

For example, taking the i-th feature channel as an example, the i-th feature channel can be divided into X segments. In this case, the segmented step size set corresponding to the i-th feature channel can be represented as: scale_ listi=[scalei1, ..., scaleij, ..., scaleiX], where scaleij is the quantization step of the j-th segment in the i-th feature channel, and the value of j is in the range [1, X].

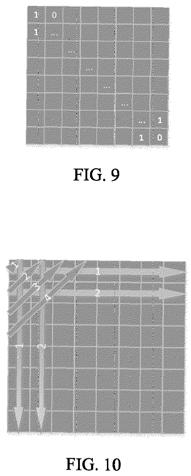

In specific implementation, features within the same feature channel can also be partitioned into multiple categories, and the category partitioning rules can be any one of the following:
Rule 1: the mean or variance of σ is derived from the distribution parameter σ. the related threshold list, or the sum of absolute values of r_q, or the bit rate is derived from the quantized residual r_q. The related threshold list and the list length X can be used for partitioning. The luma component and the chroma component can share one list, where thr_list = [thr1, thr2, ..., thrX]. The lists for the luma component and the chroma component can also be transmitted separately.
Rule 2: Channel two-dimensional flag matrix, as shown in FIG. 9, can be used for category partitioning. The luma component and the chroma component can share one matrix. The matrixes for the luma component and the chroma component can also be transmitted separately, similar to the channel flag list. Different flags indicate different categories.
Rule 3: row, column, diagonal column numbering, and list length, similar to channel numbering, can be used for category partitioning, as shown in FIG. 10.
Rule 4: transmitted row, column, and diagonal flags, similar to a channel flag list, can be used for category partitioning.
Rule 5: the quantity list of rows, columns, and diagonal columns, num_list = [num1, num2, ..., numX], and the list length X, similar to the channel quantity list, can be used for category partitioning.
Rule 6: row, column, and diagonal flags, similar to channel flags, can be used for category partitioning.

With reference to FIGs. 9 and 10, FIG. 9 is a schematic diagram of a flag matrix according to the embodiment. As illustrated in FIG. 9, the relevant data in FIG. 9 are classified into multiple categories, and each category of data may correspond to a different quantization step size. In this case, the relevant feature data within a channel can be classified and labelled in a matrix manner. In the matrix shown in FIG. 9, 0 and 1 respectively represent the category labels of the corresponding feature data within the same channel.

FIG. 10 is a schematic diagram of partitioning according to rows and columns division in the embodiment. The specific row, column, and diagonal column partitioning can be shown in FIG. 10. The relevant feature data in the channel can be partitioned into multiple rows from left to right, the relevant feature data in the channel can be partitioned into multiple columns from top to bottom, and the relevant feature data in the channel can be partitioned into multiple diagonal columns from bottom left to top right.

In an embodiment, each feature channel can also be partitioned into blocks with different quantization steps. In this case, step S20 described in this embodiment can include:
extracting picture block information and parameter setting rules corresponding to each feature channel from the feature channel differentiation information;
decoding a picture bitstream to obtain probability distribution parameters;
calculating a distribution parameter mean corresponding to each picture block information based on the probability distribution parameters;
matching the distribution parameter mean with the parameter setting rules to obtain a quantization step corresponding to each picture block information; and
constructing the dequantization precision parameters respectively corresponding to the quantized residual values based on the quantization steps.

It should be noted that during encoding, each feature channel can be partitioned into blocks and the block partitioning rules can be recorded in the feature channel differentiation information. Afterwards, different quantization steps can be set based on the different mean values of the probability distribution parameters corresponding to these blocks. The size of the partitioned blocks can be freely set.

Extracting picture block information and parameter setting rules corresponding to each feature channel from the feature channel differentiation information can include extracting the parameter setting rule and the block partitioning rule from the feature channel differentiation information, determining the blocks corresponding to each feature channel based on the block partitioning rule, to obtain the picture block information corresponding to each feature channel. Where the parameter setting rules include quantization steps corresponding to the mean values of different distribution parameters.

In the implementation, calculating the distribution parameter mean corresponding to each picture block information based on the probability distribution parameters can include calculating the average of the probability distribution parameters corresponding to each picture block information, to obtain the distribution parameter mean.

In the implementation, matching the distribution parameter mean with the parameter setting rules to obtain a quantization step corresponding to each picture block information can include performing matching on the distribution parameter mean with multiple value intervals in the parameter setting rules, and determining the quantization step corresponding to the value interval to which the distribution parameter mean belongs as the quantization step corresponding to the picture block information.

It can be understood that after obtaining the quantization step corresponding to the picture block information, the quantization step and other parameters configured to calculate the quantized residual value can be determined based on the picture block information to which the quantized residual value belongs, to calculate the dequantization precision parameter required for the dequantization of the quantized residual value.

In this embodiment, probability quantization parameters are constructed based on based on feature channel differentiation information and/or spatial point differentiation information; and the probability distribution parameters are quantized based on probability quantization parameters to obtain distribution quantization parameters. The probability quantization parameters are constructed based on the feature channel differentiation information and/or the spatial point differentiation information, and the probability distribution parameters are quantized based on the probability quantization parameters to obtain the distribution quantization parameters, which ensures that different quantization parameters can also be set for the probability distribution parameters according to the differences in feature channels and image texture of spatial points, thereby further improving the performance of the encoding method of the embodiment.

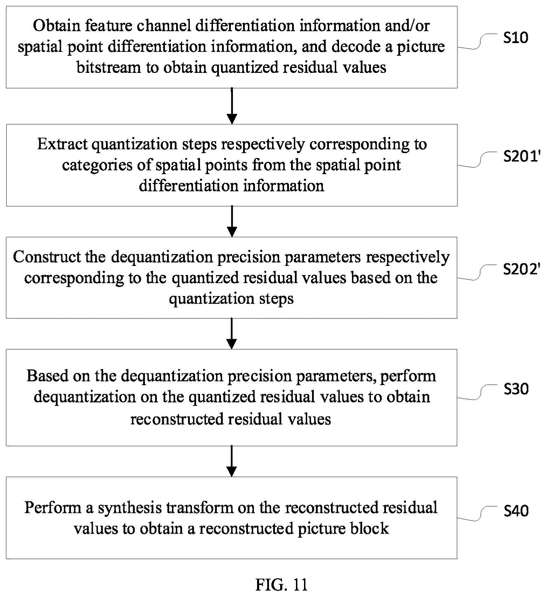

Referring to FIG. 11, FIG. 11 is a flowchart of a method for image decoding according to a fourth embodiment of the present disclosure.

Based on the first embodiment described above, step S20 of the method for image decoding in this embodiment may include steps S201'-202'.

In step S201', quantization steps respectively corresponding to categories of spatial points are extracted from the spatial point differentiation information.

It should be noted that when setting the quantization step, the spatial points in the picture can be partitioned into multiple categories based on the image texture, and different quantization steps can be set for different categories of spatial points. For example, if the spatial points in the picture are partitioned into X categories based on the picture texture, the quantization step for the j-th category of spatial points is scale_j, and the value range of j is [1, X].

Where when partitioning spatial points into categories, the spatial points can be classified based on the picture texture complexity corresponding to the spatial points. For example, three complexity intervals can be set, [0, F1], (F1, F2], and (F2, ∞). Then, based on the complexity interval to which the picture texture complexity corresponding to a spatial point belongs, the spatial points are partitioned into three categories.

In step S202', the dequantization precision parameters respectively corresponding to the quantized residual values are constructed based on the quantization steps.

It can be understood that constructing the dequantization precision parameters respectively corresponding to quantized residual values based on the quantization step(s) corresponding to each category of spatial points can include obtaining the quantization steps and other parameters used for calculating the quantized residual values according to the categories of spatial points corresponding to the quantized residual values, to calculate the dequantization precision parameters required for dequantization of each quantized residual value.

It should be noted that each spatial point actually contains C (C is the number of feature channels) points. After partitioning the spatial points into different categories, the multiple points contained in the spatial points can be further divided, such that different feature channels in one category of spatial points can correspond to different quantization steps. In this case, the spatial point differentiation information and the feature channel differentiation information can be used in combination. In this embodiment, step S20 can include:
reading partitioned categories of spatial points from the spatial point differentiation information;
reading quantization steps respectively corresponding to categories of feature channels in each of the categories of spatial points from the feature channel differentiation information; and
constructing the dequantization precision parameters respectively corresponding to the quantized residual values based on the quantization steps.

It should be noted that when further partitioning the multiple points contained in each spatial point in the categories of spatial points based on the different feature channels, the points of multiple different feature channels corresponding to one category of spatial points can correspond to different quantization steps. In this case, the multiple categories of spatial points that can be partitioned can be read from the spatial point differentiation information, and then the quantization step corresponding to each feature channel in each category of spatial points can be read.

For example, if a spatial point is partitioned into two categories, *a* and *b,* where the feature channels contained in categories *a* and *b* are both from 1 to X, then the quantization steps corresponding to feature channels in the category *a* can be represented as scale_ lista=[scale1, scale2, ..., scaleX], and the quantization steps corresponding to feature channels in the category *b* can be represented as scale_ listb=[scale1, scale2, ..., scaleX].

In specific implementation, to facilitate the decoding device to determine the specific quantization step setting method, a corresponding flag can also be set in the picture bitstream to determine how to obtain the quantization step. For example, if the flag is set to 0, the quantization step is determined based on the feature channel differentiation information. If the flag is set to 1, the quantization step is determined based on the spatial point differentiation information. If the flag is set to 2, the quantization step is determined based on both the feature channel differentiation information and the spatial point differentiation information.

It should be noted that this embodiment only illustrates a method of combining spatial point differentiation information with feature channel differentiation information. Further partitioning of multiple points contained in spatial points can also be achieved using the implementation method provided in any of the above embodiments for further partitioning of feature channels, which is not limited in the embodiment.

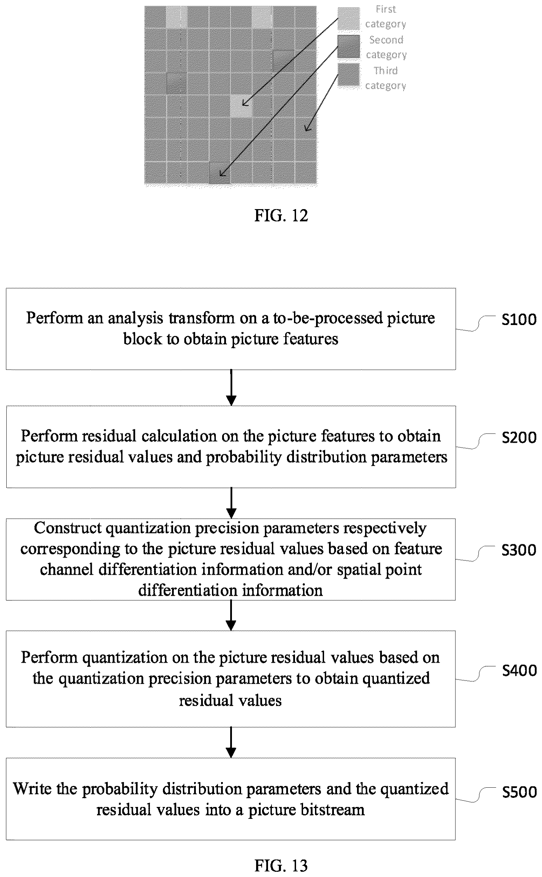

For ease of understanding, the present disclosure is explained with reference to FIG. 12, which should not be construed as limiting the scope of the present solution. FIG. 12 is a schematic diagram of category partitioning of spatial points in this embodiment. Based on the complexity of the picture texture corresponding to spatial points, spatial points can be partitioned into the first, second, and third categories (as indicated by the arrows in FIG. 12). The specific classified spatial points are shown in FIG. 12 (the color depth of each point in FIG. 12 is configured to indicate the complexity of the picture texture. The spatial points with the same color depth belong to the same category, and the darker the color, the higher the complexity of the picture texture).

In this embodiment, the quantization step corresponding to each category of spatial points is extracted from the spatial point differentiation information; and the dequantization precision parameters respectively corresponding to quantized residual values are constructed based on the quantization steps. The dequantization precision parameter for each quantized residual value is constructed based on the quantization step(s) corresponding to each category of spatial points, which ensures that different quantization steps can be set for spatial points with different picture textures, allowing for differentiated settings based on the differences in picture textures during quantization and dequantization.

The embodiments of the present disclosure provide a method for image encoding. Referring to FIG. 13, FIG. 13 is a flowchart of a method for image encoding according to a first embodiment of the present disclosure.

In this embodiment, the method for image encoding includes the following steps S100-S500.

In step S100, an analysis transform is performed on a to-be-processed picture block to obtain picture features.

It should be noted that the executing subject of this embodiment can be the encoding device used for encoding picture data. The encoding device can be an electronic device such as a personal computer, server, or other devices that can achieve the same or similar functions, which is not limited in this embodiment. In this embodiment and the following embodiments, the encoding device will be used as an example to explain the method for image encoding in the present disclosure.

It should be noted that performing analysis transform on the picture block to obtain picture features can include performing analysis transform on the picture block through an analysis transformation network, to extract feature information, to obtain picture features.

In step S200, residual calculation is performed on the picture features to obtain picture residual values and probability distribution parameters.

It should be noted that performing residual calculation on the picture features to obtain picture residual values and probability distribution parameters can include generating predicted values by a context-based prediction module; then, performing residual calculation based on picture features and predicted values to obtain picture residual values; and performing analysis on the picture residual values by a super encoding network to obtain probability distribution parameters.

In step S300, quantization precision parameters respectively corresponding to the picture residual values are constructed based on feature channel differentiation information and/or spatial point differentiation information.

It should be noted that the feature channel differentiation information can be the differentiation information for classifying the picture feature channels, and the spatial point differentiation information can be the differentiation information for classifying points in the picture. The feature channel differentiation information and spatial point differentiation information can be pre-set by the management personnel of the encoding device according to actual needs.

It should be noted that constructing the dequantization precision parameters respectively corresponding to quantized residual values based on the feature channel differentiation information and/or spatial point differentiation information can include: determining the categories of feature channels or categories of spatial points respectively corresponding to picture residual values based on the feature channel differentiation information and/or spatial point information; reading the required quantization precision parameters for quantizing the picture residual values from the feature channel differentiation information and/or spatial point differentiation information based on the categories of feature channels or categories of spatial points. Where the quantization precision parameter can be a parameter such as quantization step that can limit the quantization precision.

In step S400, quantization is performed on the picture residual values based on the quantization precision parameters to obtain quantized residual values.

It should be noted that based on the quantization precision parameters, perform quantization on the picture residuals to obtain the quantized residual values can include performing quantization calculation on the picture residual values based on the quantization precision parameters, and taking the calculated values as the quantized residual values.

In step S500, the probability distribution parameters and the quantized residual values are written into a picture bitstream.

It should be noted that writing the probability distribution parameters and the quantized residual values into a picture bitstream can include processing the probability distribution parameters through a super encoding network, then writing the processed probability distribution parameters into the picture bitstream through entropy encoding, and based on the quantized probability distribution parameters, performing entropy encoding on the quantized residual values to write them into the picture bitstream.

In specific implementation, the picture bitstreams may include a first picture bitstream and a second picture bitstream, and the first picture bitstream is configured to transmit decoding auxiliary information and the second picture bitstream is configured to transmit residual data. Then, step S500 described in this embodiment may include:
writing the probability distribution parameters into a first picture bitstream;
constructing distribution quantification parameters based on the probability distribution parameters; and
writing the quantized residual values into a second picture bitstream based on the distribution quantization parameters.

It should be noted that writing the probability distribution parameters into the first picture bitstream can include processing the probability distribution parameters through a super encoding network and then writing them into the first picture bitstream through entropy encoding. Constructing distribution quantization parameters based on probability distribution parameters can include quantizing the probability distribution parameters to obtain distribution quantization parameters. Writing the quantized residual values into the second picture bitstream based on distribution quantization parameters can include performing entropy encoding on the quantized residual values based on distribution quantization parameters, to write them into the second picture bitstream.

Where to ensure the performance of the quantizer, when quantizing the probability distribution parameters, the quantization parameters used can be constructed based on feature channel differentiation information and/or spatial point differentiation information. In this case, the step of constructing distribution quantization parameters based on the probability distribution parameters described in this embodiment may include:
constructing probability quantization parameters based on the feature channel differentiation information and/or the spatial point differentiation information; and
quantizing the probability distribution parameters based on the probability quantization parameters to obtain the distribution quantization parameters.

It should be noted that by constructing probability quantization parameters based on feature channel differentiation information and/or spatial point differentiation information, different quantization parameters can be set according to the different feature channels or spatial points corresponding to the probability distribution parameters, such that quantization can fully adapt to the differences in feature channels and the complexity of picture textures, thereby ensuring the performance of the quantizer as much as possible.

In practical implementation, to ensure that the decoding device can decode the generated picture bitstream normally, feature channel differentiation information and/or spatial point differentiation information can also be encoded in the picture bitstream.

It can be understood that during encoding, the parameters used for quantization are adjusted based on the feature channel differentiation information and/or spatial point differentiation information. If the decoding device needs to decode normally, the decoding device also needs to obtain the feature channel differentiation information and/or spatial point differentiation information. In this case, writing the feature channel differentiation information and/or spatial point differentiation information into the first picture bitstream or the second picture bitstream can ensure that the decoding device can obtain the feature channel differentiation information and/or spatial point differentiation information, thereby ensuring that the decoding device can decode normally.

In practical implementation, to avoid data confusion or overly complex streams, a third picture bitstream can also be set to transmit differentiation information through the third picture bitstream. In this case, after writing the quantized residual values into the second picture bitstream based on the distribution quantization parameters, the method further includes:
writing the feature channel differentiation information and/or the spatial point differentiation information into a third picture bitstream.

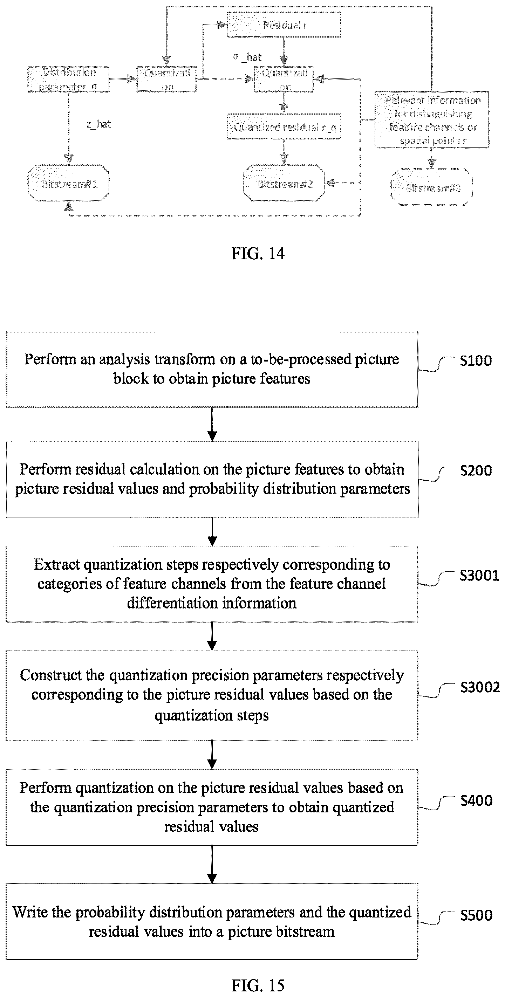

For ease of understanding, the present disclosure is explained with reference to FIG. 14, which should not be construed as limiting the scope of the present solution. FIG. 14 is a schematic diagram of the image encoding process in this embodiment. As shown in FIG. 14, the encoding device can write the quantized residual value into the second picture bitstream, write the coding distribution parameter z_cat calculated from the probability distribution parameter σ into the first picture bitstream, write the relevant information for distinguishing feature channels or spatial points (feature channel differentiation information and/or the spatial point differentiation information) into the first picture bitstream or the second picture bitstream, or into the third picture bitstream. If necessary, the relevant information for distinguishing feature channels or spatial points can be directly written into the encoding device as local parameters in advance, without the need for bitstream transmission, and keep the encoding device and decoding device consistent.

In this embodiment, picture features are obtained by performing an analysis transform on a to-be-processed picture block; residual calculation is performed on the picture features to obtain picture residual values and probability distribution parameters; quantization precision parameters respectively corresponding to picture residual values are constructed based on feature channel differentiation information and/or spatial point differentiation information; quantization is performed on the residual values of the picture based on the quantization precision parameters to obtain quantized residual values; and the probability distribution parameters and quantized residual values are written into the picture bitstream. Since different quantization parameters can be set in the encoding process according to differences in feature channels and/or spatial point picture texture, which allows more important features to incur smaller quantization losses, thereby improving the performance of encoding and decoding.

Referring to FIG. 15, FIG. 15 is a flowchart of a method for image encoding according to a second embodiment of the present disclosure.

Based on the first embodiment of the method for image encoding described above, step S300 of the method for image encoding in this embodiment includes steps S3001-S3002.

In step S3001, quantization steps respectively corresponding to categories of feature channels are extracted from the feature channel differentiation information.

It should be noted that when distinguishing feature channels, feature channels can be partitioned into multiple categories, and different quantization steps can be assigned to feature channels of different categories. In this case, the feature channel differentiation information includes the category partitioning rules of feature channels and the quantization steps corresponding to each category of feature channels. In this case, the quantization step corresponding to each category of feature channels can be directly extracted from the feature channel differentiation information.

Where the category partitioning rule setting method for feature channels is similar to the above setting method, and will not be repeated here.

In step S3002, the quantization precision parameters respectively corresponding to the picture residual values are constructed based on the quantization steps.

It can be understood that after the quantization step corresponding to each category of feature channel is determined, the quantization step and other parameters for quantizing the picture residual values can be determined based on the categories of feature channels corresponding to picture residual values, to determine the quantization precision parameter corresponding to each picture residual value.

In the specific implementation, for the same feature channel, different quantization steps can be further set. For example, multiple value intervals may be divided by setting thresholds, and further configuration may be performed according to the value interval to which the probability distribution parameter or a value calculated based on the probability distribution parameter belongs. Step S3002 in the embodiment may include:
extracting parameter interval thresholds from the feature channel differentiation information; and
constructing the quantization precision parameters respectively corresponding to the picture residual values based on the probability distribution parameters, the parameter interval thresholds, and the quantization steps.

It should be noted that when constructing the quantization precision parameter corresponding to each feature channel based on probability distribution parameter, parameter interval threshold, and quantization step, the feature channel category to which the quantized residual value belongs can be obtained first, and the quantization steps and parameter interval thresholds corresponding to this feature channel category can be obtained. Multiple value intervals can be divided according to the parameter interval thresholds, and then the value interval (which can also be the value interval of the mean or variance of the probability distribution parameter) of the probability distribution parameter corresponding to the quantized residual value can be calculated. Based on the value interval, the corresponding quantization step can be selected from the multiple quantization steps corresponding to this feature channel category, to obtain the quantization precision parameter corresponding to each picture residual value.

In the specific implementation process, the same feature channel category can be further divided. For example, one category of feature channels is divided into multiple segments, and each segment corresponds to a different quantization step, then step S3002 described in this embodiment can include:
parsing the feature channel differentiation information, to obtain a segmented step size set corresponding to each category of feature channel;
extracting the quantization step corresponding to each channel segment from the segmented step size set; and
constructing the quantization precision parameters respectively corresponding to the picture residual values based on the quantization steps.

It should be noted that after further dividing a category of feature channels, each category of feature channels can correspond to multiple different quantization steps, which can be stored in the form of a set. In this case, the feature channel differentiation information can be parsed to obtain the segmented step size set corresponding to each category of feature channels, and then the quantization step corresponding to each channel segment can be extracted from the segmented step size set. Where the segmentation method for different categories of feature channels may be different or the same, which is not limited in the embodiments.

In this case, constructing the quantization precision parameter corresponding to each picture residual value based on the quantization step can include obtaining the category of feature channels corresponding to the picture residual value, determining the channel segment to which the picture residual value belongs in that category of feature channels, and determining the quantization step and other parameters used for quantization of the picture residual value based on the category of feature channels and channel segment, to obtain the quantization precision parameter corresponding to each picture residual value.

In the specific implementation, when setting the quantization step, the quantization step can be set according to the picture texture. In this case, step S3002 described in this embodiment can include:
extracting quantization steps respectively corresponding to categories of spatial points from the spatial point differentiation information; and
constructing the quantization precision parameters respectively corresponding to the picture residual values based on the quantization steps.

It should be noted that when setting the quantization step, the spatial points in the picture can be partitioned into multiple categories based on the image texture, and different quantization steps can be set for different categories of spatial points. For example, if the spatial points in the picture are partitioned into X categories based on the picture texture, the quantization step for the j-th category of spatial points is scale_j, and the value range of j is [1, X].

Where when classifying spatial points, the spatial points can be partitioned based on the picture texture complexity corresponding to the spatial points. For example, three complexity intervals can be set, [0, F1], (F1, F2], and (F2, ∞). Then, based on the complexity interval to which the picture texture complexity corresponding to a spatial point belongs, the spatial points are partitioned into three categories.

It can be understood that constructing the quantization precision parameter corresponding to each picture residual value based on the quantization step(s) corresponding to each category of spatial points can include obtaining the quantization step and other parameters used for quantization of the picture residual value according to the category of spatial points corresponding to the picture residual value, to obtain the quantization precision parameter corresponding to each picture residual value.

It should be noted that each spatial point actually contains C (C is the number of feature channels) points. After partitioning the spatial points into different categories, the multiple points contained in the spatial points can be further divided, such that different feature channels in one category of spatial points can correspond to different quantization steps. In this case, the spatial point differentiation information and the feature channel differentiation information can be used in combination. In this embodiment, step S3002 can include:
reading partitioned categories of spatial points from the spatial point differentiation information;
reading quantization steps respectively corresponding to categories of feature channels in the categories of spatial points from the feature channel differentiation information; and
constructing the quantization precision parameters respectively corresponding to the picture residual values based on the quantization steps.

It should be noted that when further partitioning the multiple points contained in each spatial point in the categories of spatial points based on the different feature channels, the points of multiple different feature channels corresponding to one category of spatial points can correspond to different quantization steps. In this case, the multiple categories of spatial points that can be partitioned can be read from the spatial point differentiation information, and then the quantization step corresponding to each feature channel in each category of spatial points can be read.

For example, if a spatial point is partitioned into two categories, *a* and *b,* where the feature channels contained in categories *a* and *b* are both from 1 to X, then the quantization steps corresponding to feature channels in the category *a* can be represented as scale_ lista=[scale1, scale2, ..., scaleX], and the quantization steps corresponding to feature channels in the category *b* can be represented as scale_ listb=[scalel, scale2, ..., scaleX].

In specific implementation, to facilitate the encoding device to determine the specific quantization step setting method, a corresponding flag can also be preset in the encoding device to determine how to obtain the quantization step. For example, if the flag is set to 0, the quantization step is determined based on the feature channel differentiation information. If the flag is set to 1, the quantization step is determined based on the spatial point differentiation information. If the flag is set to 2, the quantization step is determined based on both the feature channel differentiation information and the spatial point differentiation information.

It should be noted that this embodiment only illustrates a method of combining spatial point differentiation information with feature channel differentiation information. Further partitioning of multiple points contained in spatial points can also be achieved using the implementation method provided in any of the above embodiments for further partitioning of feature channels, which is not limited in the embodiment.

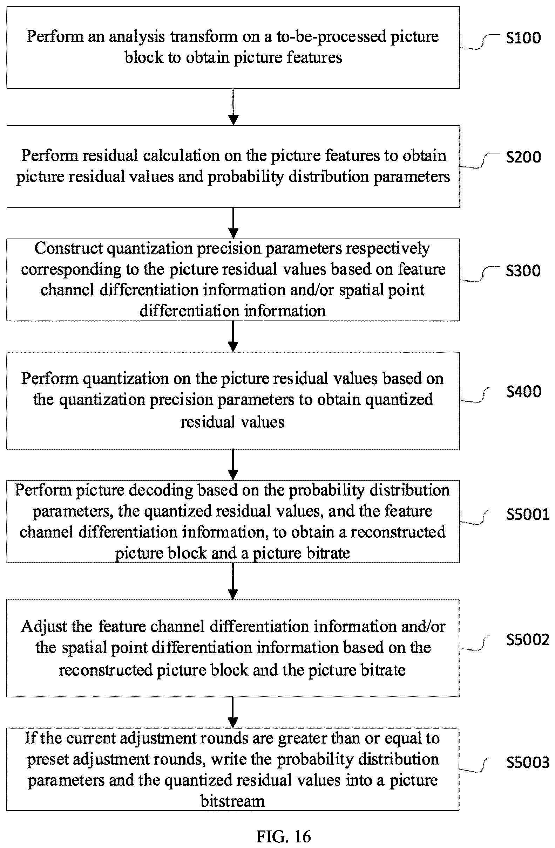

Referring to FIG. 16, FIG. 16 is a flowchart of a method for image encoding according to a third embodiment of the present disclosure.

Based on the first embodiment of the method for image encoding described above, step S500 of the method for image encoding in this embodiment includes steps S5001-S5003.

In step S5001, picture decoding is performed based on the probability distribution parameters, the quantized residual values, and the feature channel differentiation information, to obtain a reconstructed picture block and a picture bitrate.

It should be noted that image decoding can be performed based on probability distribution parameters, quantized residual values, and feature channel differentiation information to obtain the reconstructed picture block and image bit rate. The method for image decoding provided in any one of the above embodiments can be configured to decode the picture based on probability distribution parameters, quantized residual values, and feature channel differentiation information to obtain the reconstructed picture block, and calculate picture bit rate based on probability distribution parameters.

In step S5002, the feature channel differentiation information and/or the spatial point differentiation information is adjusted based on the reconstructed picture block and the picture bitrate.

It should be noted that the encoding device can also optimize and adjust the parameters used in the encoding process. In this case, adjusting the feature channel differentiation information based on the reconstructed picture block and picture bit rate can include: optimizing and adjusting the quantization related parameters in the feature channel differentiation information and/or spatial point differentiation information based on the reconstructed picture block and picture bit rate.

In specific implementation, the management personnel of the encoding device can modify the optimal threshold mode flag in the encoding device to determine whether to perform parameter optimization adjustment. If the optimal threshold mode flag value is 0, it indicates that parameter optimization adjustment will not be performed; If the optimal threshold mode flag value is 1, it indicates that parameter optimization adjustment is being carried out.

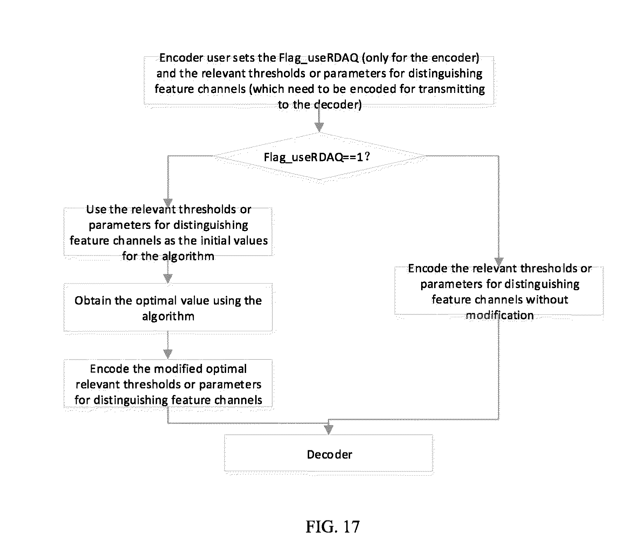

For ease of understanding, the present disclosure is explained with reference to FIG. 17, which should not be construed as limiting the scope of the present solution. FIG. 17 is a schematic diagram of the operation process of the optimal threshold mode flag. As shown in FIG. 17, the encoding device user can set the optimal threshold mode flag Flag_useRDAQ, and input the set flag and the relevant thresholds or parameters for distinguishing the feature channels into the encoding device. The encoding device will detect whether the value of the optimal threshold mode flag is 1. If it is 1, parameter optimization adjustment will be enabled, and the input relevant thresholds or parameters will be used as the initial values. Then, multiple iterations will be performed to encode the relevant thresholds or parameters of the optimal distinguishing feature channel obtained after iteration, and the generated picture bitstream will be input into the decoding device; if it is not 1, encoding is performed directly based on the relevant thresholds or parameters of the input distinguishing feature channel, and the encoded picture bitstream will be passed to the decoding device.

In step S5003, if the current adjustment rounds are greater than or equal to preset adjustment rounds, the probability distribution parameters and the quantized residual values are written into a picture bitstream.

It should be noted that the preset adjustment rounds can be the preset number of times for adjusting the feature channel differentiation information. The current adjustment rounds can be the number of times the feature channel differentiation information has been adjusted.

It can be understood that if the current adjustment rounds are greater than or equal to the preset adjustment rounds, it means that the parameter optimization adjustment has been completed. In this case, the probability distribution parameters and the quantized residual values can be written into the picture bitstream, and the picture bitstream can be transmitted to the decoding device. Where the adjusted feature channel differentiation information and/or spatial point differentiation information can also be written into the picture bitstream.

If the current adjustment rounds are less than the preset adjustment rounds, it means that the optimization and adjustment of the parameters have not been completed. Therefore, the process may return to the step of constructing quantization precision parameter corresponding to each feature channel based on the feature channel differentiation information.

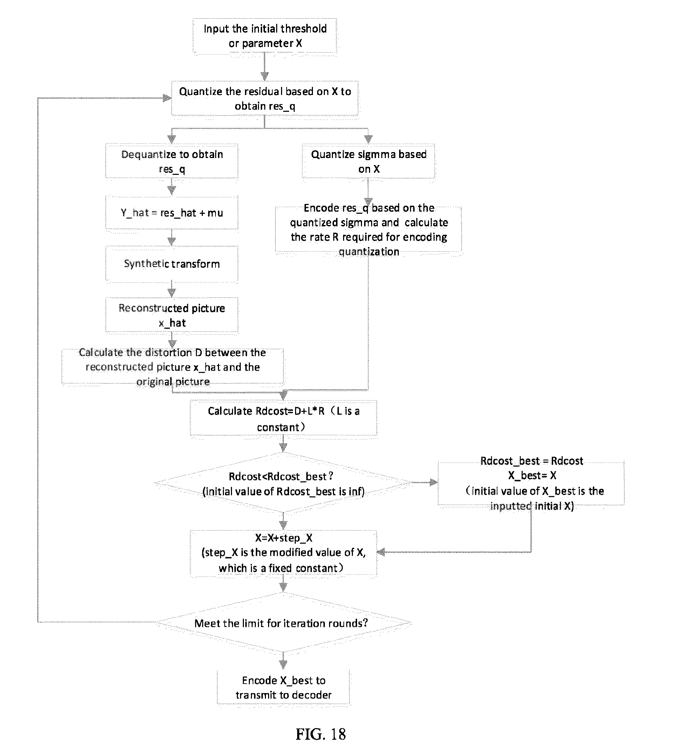

For ease of understanding, the present disclosure is explained with reference to FIG. 18, which should not be construed as limiting the scope of the present solution. FIG. 18 is the flow chart of parameter optimization of this embodiment. In FIG. 18, the index representing distortion D can be a combination of one or more of msssim, vif, fsim, nlpd, iw-ssim, vmaf, psnr_HVS, or other indicators. X is the input threshold or parameter related to distinguishing feature channels, res_q is the quantized residual value, sigma is the probability distribution parameter σ, and step_X can be preset by the encoding device management personnel according to actual needs. To meet the iteration number limit, the current adjustment rounds can be compared with the preset adjustment rounds. If the current adjustment rounds are greater than or equal to the preset adjustment rounds, it is determined that the iteration number limit is met; if the current adjustment rounds are less than the preset adjustment rounds, it is determined that the iteration number limit is not met.

In this embodiment, picture decoding is performed based on the probability distribution parameters, the quantized residual values, and the feature channel differentiation information, to obtain a reconstructed picture block and a picture bitrate; the feature channel differentiation information and/or the spatial point differentiation information is adjusted based on the reconstructed picture block and the image bitrate; if the current adjustment iteration is greater than or equal to a preset adjustment iteration, writing the probability distribution parameters and the quantized residual values into a picture bitstream. Due to image decoding and adjustment of feature channel differentiation information and/or spatial point differentiation information based on the reconstructed picture block and the picture bitrate, the parameters used in the final encoding are ensured to be high-quality solutions, thereby further improving image encoding performance.

In addition, the embodiments of the present disclosure further propose a storage medium on which an image encoding or decoding program is stored. When the image encoding program is executed by a processor, it implements the steps of the method for image encoding as described above, and when the image decoding program is executed by a processor, it implements the steps of the method for image decoding as described above.

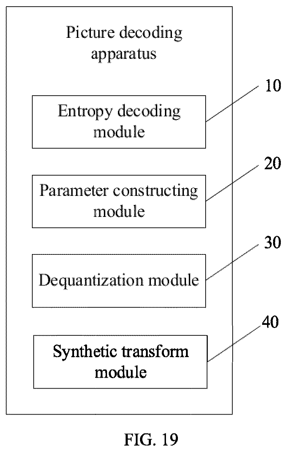

Referring to FIG. 19, FIG. 19 is a structural block diagram of an apparatus for image decoding according to a first embodiment of the present disclosure.

As shown in FIG. 19, the apparatus for image decoding proposed in the embodiments of the present disclosure includes:
an entropy decoding module 10, configured to obtain feature channel differentiation information and/or spatial point differentiation information, and decode a picture bitstream to obtain quantized residual values;
a parameter construction module 20, configured to construct dequantization precision parameters respectively corresponding to the quantized residual values based on the feature channel differentiation information and/or the spatial point differentiation information;
a dequantization module 30, configured to, based on the dequantization precision parameters, perform dequantization on the quantized residual values to obtain reconstructed residual values; and
a synthesis transformation module 40, configured to perform a synthesis transform on the reconstructed residual values to obtain a reconstructed picture block.

For ease of understanding, this explanation is based on FIG. 3 above, but it does not limit this solution. In this embodiment, the entropy decoding module can execute the entropy decoding process shown in FIG. 3, the parameter construction module and the dequantization module execute the dequantization process shown in FIG. 3, and the synthesis transformation module executes the synthesis transformation process shown in FIG. 3 through a synthesis transformation network.

In the embodiments, the feature channel differentiation information and/or the spatial point differentiation information is obtained, and a picture bitstream is decoded to obtain quantized residual values; dequantization precision parameters respectively corresponding to the quantized residual values are constructed based on the feature channel differentiation information and/or the spatial point differentiation information; dequantization is performed on the quantized residual values based on the dequantization precision parameters to obtain the reconstructed residual values; and synthesis transform is performed on the reconstructed residual values to obtain the reconstructed picture block. Since the corresponding dequantization parameters are constructed according to the feature channel differentiation information and/or the spatial point differentiation information for dequantization, different quantization parameters can be set in the encoding process according to differences in feature channels and/or spatial point picture texture, which allows more important features to incur smaller quantization losses, thereby improving the performance of encoding and decoding.

In an embodiment, the picture bitstreams may include a first picture bitstream and a second picture bitstream, where the first picture bitstream is configured to transmit decoding auxiliary information and the second picture bitstream is configured to transmit residual data;
The entropy decoding module 10 is also configured to extract coding distribution parameters from the first picture bitstream; decode the coding distribution parameters to obtain probability distribution parameters; perform quantization on the probability distribution parameters to obtain distribution quantization parameters; and decode the second picture bitstream based on the distribution quantization parameters to obtain quantized residual values.

In an embodiment, the entropy decoding module 10 is further configured to construct probability quantization parameters based on based on feature channel differentiation information and/or spatial point differentiation information; and quantize the probability distribution parameters based on probability quantization parameters to obtain distribution quantization parameters.

In an embodiment, the entropy decoding module 10 is further configured to decode the first picture bitstream or the second picture bitstream, to obtain feature channel differentiation information and/or spatial point differentiation information.

In an embodiment, the picture bitstream further includes a third picture bitstream, which is configured to transmit differentiation information;
The entropy decoding module 10 is also configured to decode the third picture bitstream to obtain the feature channel differentiation information and/or the spatial point differentiation information.

In an embodiment, the parameter construction module 20 is also configured to extract the quantization step corresponding to each category of feature channels from the feature channel differentiation information; and construct dequantization precision parameters respectively corresponding to quantized residual values based on the quantization steps.

In an embodiment, the parameter construction module 20 is also configured to extract the quantization steps respectively corresponding to spatial points from the spatial point differentiation information; and construct dequantization precision parameters respectively corresponding to quantized residual values based on the quantization steps.

In an embodiment, the parameter construction module 20 is also configured to read partitioned categories of spatial points from the spatial point differentiation information; read the quantization step respectively corresponding to categories of feature channels in the categories of spatial points from the feature channel differentiation information; and construct dequantization precision parameters respectively corresponding to quantized residual values based on the quantization steps.

In an embodiment, the parameter construction module 20 is also configured to decode the picture bitstream to obtain probability distribution parameters; extract parameter interval thresholds from the feature channel differentiation information; and construct the dequantization precision parameters respectively corresponding to the quantized residual values based on the probability distribution parameters, the quantization steps, and the parameter interval thresholds.

In an embodiment, the parameter construction module 20 is further configured to extract picture block information and parameter setting rules corresponding to each feature channel from the feature channel differentiation information; decode the picture bitstream to obtain probability distribution parameters; calculate the distribution parameter mean corresponding to each picture block information based on the probability distribution parameters; match the distribution parameter mean with the parameter setting rule to obtain the quantization step corresponding to each picture block information; and construct dequantization precision parameters respectively corresponding to quantized residual values based on the quantization steps.

In an embodiment, the parameter construction module 20 is also configured to parse the feature channel differentiation information to obtain the segmented step size set corresponding to each category of feature channels; extract the quantization step corresponding to each channel segment from the segmented step size set; and construct dequantization precision parameters respectively corresponding to quantized residual values based on the quantization steps.

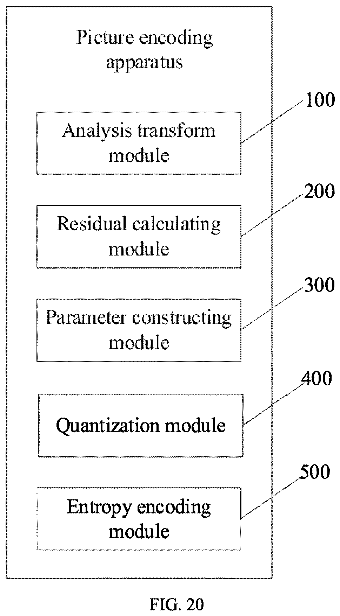

Referring to FIG. 20, FIG. 20 is a structural block diagram of an apparatus for image encoding according to a first embodiment of the present disclosure.

As shown in FIG. 20, the apparatus for image encoding proposed in the embodiments of the present disclosure includes:
an analysis transformation module 100, configured to perform an analysis transform on a to-be-processed picture block to obtain picture features;
a residual calculation module 200, configured to perform residual calculation on the picture features to obtain picture residual values and probability distribution parameters;
a parameter construction module 300, configured to construct quantization precision parameters respectively corresponding to feature channels based on feature channel differentiation information and/or spatial point differentiation information;
a quantization module 400, configured to perform quantization on the picture residual values based on the quantization precision parameters to obtain quantized residual values; and
an entropy encoding module 500, configured to write the probability distribution parameters and the quantized residual values into a picture bitstream.

For ease of understanding, this explanation is based on FIG. 3 above, but it does not limit this solution. In this embodiment, the analysis transformation module can execute the analysis transformation process shown in FIG. 3 through the analysis transformation network. The residual calculation module, parameter construction module, and quantization module execute the quantization process shown in FIG. 3, and the entropy encoding module executes the entropy encoding process shown in FIG. 3.

In this embodiment, picture features are obtained by performing an analysis transform on a to-be-processed picture block; residual calculation is performed on the picture features to obtain picture residual values and probability distribution parameters; quantization precision parameters respectively corresponding to picture residual values are constructed based on feature channel differentiation information and/or spatial point differentiation information; quantization is performed on the residual values of the picture based on the quantization precision parameters to obtain quantized residual values; and the probability distribution parameters and quantized residual values are written into the picture bitstream. Since different quantization parameters can be set in the encoding process according to differences in feature channels and/or spatial point picture texture, which allows more important features to incur smaller quantization losses, thereby improving the performance of encoding and decoding.

In an embodiment, the picture bitstreams may include a first picture bitstream and a second picture bitstream, where the first picture bitstream is configured to transmit decoding auxiliary information and the second picture bitstream is configured to transmit residual data;
The entropy encoding module 500 is also configured to write the probability distribution parameters into the first picture bitstream; construct distribution quantification parameters based on the probability distribution parameters; write the quantized residual values into the second picture bitstream based on the distribution quantization parameters.

In an embodiment, the entropy encoding module 500 is further configured to construct probability quantization parameters based on based on feature channel differentiation information and/or spatial point differentiation information; and quantize the probability distribution parameters based on probability quantization parameters to obtain distribution quantization parameters.

In an embodiment, the entropy encoding module 500 is further configured to write the feature channel differentiation information and/or the spatial point differentiation information into the first picture bitstream or the second picture bitstream.

In an embodiment, the picture bitstream further includes a third picture bitstream, which is configured to transmit differentiation information;
The entropy encoding module 500 is also configured to write the feature channel differentiation information and/or the spatial point differentiation information into a third picture bitstream.

In an embodiment, the parameter construction module 300 is also configured to extract the quantization step corresponding to each category of feature channels from the feature channel differentiation information; construct quantization precision parameters respectively corresponding to picture residual values based on the quantization steps.

In an embodiment, the parameter construction module 300 is further configured to extract parameter interval thresholds from the feature channel differentiation information; construct quantization precision parameters respectively corresponding to picture residual values based on the probability distribution parameters, parameter interval thresholds, and quantization steps.

In an embodiment, the parameter construction module 300 is also configured to parse the feature channel differentiation information to obtain the segmented step size set corresponding to each category of feature channels; extract the quantization step corresponding to each channel segment from the segmented step size set; and construct quantization precision parameters respectively corresponding to picture residual values based on the quantization steps.

In an embodiment, the parameter construction module 300 is also configured to extract the quantization steps respectively corresponding to spatial points from the spatial point differentiation information; and construct quantization precision parameters respectively corresponding to picture residual values based on the quantization steps.

In an embodiment, the parameter construction module 300 is also configured to read partitioned categories of spatial points from the spatial point differentiation information; read the quantization step respectively corresponding to categories of feature channels in the categories of spatial points from the feature channel differentiation information; and construct quantization precision parameters respectively corresponding to the picture residual values based on the quantization steps.

In an embodiment, the entropy encoding module 500 is further configured to perform picture decoding based on the probability distribution parameters, the quantized residual values, and the feature channel differentiation information, to obtain a reconstructed picture block and a picture bitrate; adjust the feature channel differentiation information and/or the spatial point differentiation information based on the reconstructed picture block and the image bitrate; if the current adjustment iteration is greater than or equal to a preset adjustment iteration, write the probability distribution parameters and the quantized residual values into a picture bitstream.

In an embodiment, the entropy encoding module 500 is also configured to, if the current adjustment rounds are less than the preset adjustment rounds, return to the step of constructing quantization precision parameters respectively corresponding to the feature channels according to the feature channel differentiation information.

It should be understood that the above is only an example and does not constitute any limitation on the technical solution in the present disclosure. In specific applications, those skilled in the art can make settings as needed, which is not limited in the present disclosure.

It should be noted that the workflow described above is only illustrative and does not limit the scope of protection of the present disclosure. In practical applications, those skilled in the art can choose some or all of them to achieve the purpose of this embodiment according to actual needs, which is not limited.

In addition, technical details not described in detail in this embodiment can refer to the image encoding or decoding methods provided in any of the embodiments of the present disclosure, which will not be repeated here.

It should be noted that, in this document, the term "include", "include" or any other variation thereof is intended to cover non-exclusive inclusion, such that a process, method, article, or system that includes a set of elements includes not only those elements, but also other elements that are not explicitly listed, or other elements that are inherent to such a process, method, commodity, or system. Without further limitation, the element defined by the statement "including a ......" do not preclude the existence of additional identical elements in the process, method, article, or system that include the element.

The above embodiments in the present disclosure are numbered for description only and do not represent the advantages or disadvantages of the embodiments.

Through the description of the above embodiments, those skilled in the art can clearly understand that the methods of the above embodiments can be implemented by means of software plus a necessary general-purpose hardware platform, and of course also by hardware, but in many cases the former is a better implementation. Based on this understanding, the essence of the technical solution disclosed herein, or in other words, the part that contributes to the prior art, may be embodied in the form of a software product. The computer software product is stored on a storage medium (such as Read Only Memory (ROM)/RAM, magnetic disk, or optical disk) and includes a set of instructions for enabling a terminal device (which may be a mobile phone, computer, server, or network device, etc.) to execute the methods described in the embodiments of the present disclosure.

The above are merely preferred embodiments of the present disclosure and are not intended to limit the scope of the present disclosure. Any equivalent structural or process modifications made based on the content of the specification and drawings of the present disclosure, or direct or indirect applications in other related technical fields, shall likewise fall within the scope of patent protection of the present disclosure.

## Claims

1. A method for image decoding, comprising:
obtaining feature channel differentiation information and/or spatial point differentiation information, and decoding a picture bitstream to obtain quantized residual values;
constructing dequantization precision parameters respectively corresponding to the quantized residual values based on the feature channel differentiation information and/or the spatial point differentiation information;
for any one of the quantized residual values, performing dequantization on the quantized residual value based on the dequantization precision parameter corresponding to the quantized residual value, to obtain reconstructed residual values; and
performing a synthesis transform on the reconstructed residual values to obtain a reconstructed picture block.

2. The method for image decoding according to claim 1, wherein decoding the picture bitstream to obtain the quantized residual values comprises:
extracting coding distribution parameters from a first picture bitstream;
decoding the coding distribution parameters to obtain probability distribution parameters;
quantizing the probability distribution parameters to obtain distribution quantization parameters; and
decoding a second picture bitstream based on the distribution quantization parameters to obtain the quantized residual values.

3. The method for image decoding according to claim 2, wherein quantizing the probability distribution parameters to obtain the distribution quantization parameters comprises:
constructing probability quantization parameters based on the feature channel differentiation information and/or the spatial point differentiation information; and
quantizing the probability distribution parameters based on the probability quantization parameters to obtain the distribution quantization parameters.

4. The method for image decoding according to claim 3, wherein constructing the probability quantization parameters based on the feature channel differentiation information and/or the spatial point differentiation information comprises:
constructing the probability quantization parameters based on feature channels or spatial points corresponding to the probability distribution parameters;
wherein different feature channels or spatial points correspond to different probability quantization parameters.

5. The method for image decoding according to claim 1, wherein obtaining the feature channel differentiation information and/or the spatial point differentiation information comprises:
decoding a picture bitstream to obtain the feature channel differentiation information and/or the spatial point differentiation information.

6. The method for image decoding according to claim 1, wherein constructing the dequantization precision parameters respectively corresponding to the quantized residual values based on the feature channel differentiation information and/or the spatial point differentiation information comprises:
extracting quantization steps respectively corresponding to categories of feature channels from the feature channel differentiation information; and
constructing the dequantization precision parameters respectively corresponding to the quantized residual values based on the quantization steps.

7. The method for image decoding according to claim 6, wherein different categories of feature channels correspond to different quantization steps.

8. The method for image decoding according to claim 1, wherein constructing the dequantization precision parameters respectively corresponding to the quantized residual values based on the feature channel differentiation information and/or the spatial point differentiation information comprises:
extracting quantization steps respectively corresponding to categories of spatial points from the spatial point differentiation information; and
constructing the dequantization precision parameters respectively corresponding to the quantized residual values based on the quantization steps.

9. The method for image decoding according to claim 8, wherein different categories of spatial points correspond to different quantization steps.

10. The method for image decoding according to claim 1, wherein constructing the dequantization precision parameters respectively corresponding to the quantized residual values based on the feature channel differentiation information and/or the spatial point differentiation information comprises:
reading partitioned categories of spatial points from the spatial point differentiation information;
reading quantization steps respectively corresponding to categories of feature channels in each of the partitioned categories of spatial points from the feature channel differentiation information; and
constructing the dequantization precision parameters respectively corresponding to the quantized residual values based on the quantization steps.

11. The method for image decoding according to claim 6, wherein constructing the dequantization precision parameters respectively corresponding to the quantized residual values based on the quantization steps comprises:
decoding a picture bitstream to obtain probability distribution parameters;
extracting parameter interval thresholds from the feature channel differentiation information; and
constructing the dequantization precision parameters respectively corresponding to the quantized residual values based on the probability distribution parameters, the quantization steps, and the parameter interval thresholds.

12. The method for image decoding according to claim 1, wherein constructing the dequantization precision parameters respectively corresponding to the quantized residual values based on the feature channel differentiation information and/or the spatial point differentiation information comprises:
parsing the feature channel differentiation information;
for any one of the quantized residual values,
obtaining segmented step size sets respectively corresponding to categories of feature channels, wherein the segmented step size set corresponding to one of the categories of feature channels comprises different quantization steps;
extracting, from the segmented step size set corresponding to one of the categories of feature channels, the quantization step corresponding to a channel segment to which the quantized residual value belongs; and
constructing the dequantization precision parameter corresponding to the quantized residual value based on the quantization step.

13. The method for image decoding according to claim 1, further comprising:
for any one of the quantized residual values,
obtaining a category of feature channels corresponding to the quantized residual value,
determining a channel segment to which the quantized residual value belongs in the category of feature channels,
determining a quantization step corresponding to the quantized residual value based on the category of feature channels and the channel segment, and
determining the dequantization precision parameter corresponding to the quantized residual value based on the quantization step; wherein a segmented step size set corresponding to one category of feature channels comprises different quantization steps, one category of feature channels is divided into a plurality of channel segments, and each channel segment corresponds to one quantization step.

14. The method for image decoding according to claim 1, wherein constructing the dequantization precision parameters respectively corresponding to the quantized residual values based on the feature channel differentiation information and/or the spatial point differentiation information comprises:
determining categories of feature channels and/or categories of spatial points respectively corresponding to the quantized residual values based on the feature channel differentiation information and/or the spatial point differentiation information; and
determining the dequantization precision parameters respectively corresponding to the quantized residual values based on the categories of feature channels and/or the categories of spatial points;
wherein for different categories of feature channels and/or different categories of spatial points, different quantization precisions are adopted.

15. A method for image encoding, comprising:
performing an analysis transform on a to-be-processed picture block to obtain picture features;
performing residual calculation on the picture features to obtain picture residual values and probability distribution parameters;
constructing quantization precision parameters respectively corresponding to the picture residual values based on feature channel differentiation information and/or spatial point differentiation information;
performing quantization on the picture residual values based on the quantization precision parameters to obtain quantized residual values; and
writing the probability distribution parameters and the quantized residual values into a picture bitstream.

16. The method for image encoding according to claim 15, wherein writing the probability distribution parameters and the quantized residual values into the picture bitstream comprises:
writing the probability distribution parameters into a first picture bitstream;
constructing distribution quantification parameters based on the probability distribution parameters; and
writing the quantized residual values into a second picture bitstream based on the distribution quantization parameters.

17. The method for image encoding according to claim 15, wherein constructing the distribution quantification parameters based on the probability distribution parameters comprises:
constructing probability quantization parameters based on the feature channel differentiation information and/or the spatial point differentiation information; and
quantizing the probability distribution parameters based on the probability quantization parameters to obtain the distribution quantization parameters.

18. The method for image encoding according to claim 17, wherein constructing the probability quantization parameters based on the feature channel differentiation information and/or the spatial point differentiation information comprises:
constructing the probability quantization parameters based on feature channels or spatial points corresponding to the probability distribution parameters;
wherein different feature channels or spatial points correspond to different probability quantization parameters.

19. The method for image encoding according to claim 15, further comprising:
writing the feature channel differentiation information and/or the spatial point differentiation information into a picture bitstream.

20. The method for image encoding according to claim 15, wherein constructing the quantization precision parameters respectively corresponding to the picture residual values based on the feature channel differentiation information and/or the spatial point differentiation information comprises:
extracting quantization steps respectively corresponding to categories of feature channels from the feature channel differentiation information; and
constructing the quantization precision parameters respectively corresponding to the picture residual values based on the quantization steps.

21. The method for image encoding according to claim 20, further comprising:
partitioning feature channels into categories; and
for each of the categories of feature channels, determining a quantization step corresponding to the category;
wherein different categories of feature channels correspond to different quantization steps.

22. The method for image encoding according to claim 20, wherein constructing the quantization precision parameters respectively corresponding to the picture residual values based on the quantization steps comprises:
extracting parameter interval thresholds from the feature channel differentiation information;
and
constructing the quantization precision parameters respectively corresponding to the picture residual values based on the probability distribution parameters, the parameter interval thresholds, and the quantization steps.

23. The method for image encoding according to claim 15, wherein constructing the quantization precision parameters respectively corresponding to the picture residual values based on the feature channel differentiation information and/or the spatial point differentiation information comprises:
parsing the feature channel differentiation information;
for any one of the picture residual values,
obtaining segmented step size sets respectively corresponding to categories of feature channels, wherein the segmented step size set corresponding to one of the categories of feature channels comprises different quantization steps;
extracting, from the segmented step size set corresponding to one of the categories of feature channels, the quantization step corresponding to a channel segment to which the picture residual value belongs; and
constructing the quantization precision parameter corresponding to the picture residual value based on the quantization step.

24. The method for image encoding according to claim 15, wherein constructing the quantization precision parameters respectively corresponding to the picture residual values based on the feature channel differentiation information and/or the spatial point differentiation information comprises:
extracting quantization steps respectively corresponding to categories of spatial points from the spatial point differentiation information; and
constructing the quantization precision parameters respectively corresponding to the picture residual values based on the quantization steps.

25. The method for image encoding according to claim 24, further comprising:
partitioning spatial points in a picture into categories according to picture texture; and
for each of the categories of spatial points, determining the quantization step corresponding to the category;
wherein different categories of spatial points correspond to different quantization steps.

26. The method for image encoding according to claim 15, wherein constructing the quantization precision parameters respectively corresponding to the picture residual values based on the feature channel differentiation information and/or the spatial point differentiation information comprises:
reading partitioned categories of spatial points from the spatial point differentiation information;
reading quantization steps respectively corresponding to categories of feature channels in each of the partitioned categories of spatial points from the feature channel differentiation information; and
constructing the quantization precision parameters respectively corresponding to the picture residual values based on the quantization steps.

27. The method for image encoding according to claim 15, further comprising:
for any one of the picture residual values,
obtaining a category of feature channels corresponding to the picture residual value,
determining a channel segment to which the picture residual value belongs in the category of feature channels,
determining a quantization step for quantizing the picture residual value based on the category of feature channels and the channel segment, and
determining the quantization precision parameter corresponding to the picture residual value based on the quantization step; wherein a segmented step size set corresponding to one category of feature channels comprises different quantization steps, and one category of feature channels is divided into a plurality of channel segments, each channel segment corresponds to one quantization step.

28. The method for image encoding according to claim 15, wherein constructing the quantization precision parameters respectively corresponding to the picture residual values based on the feature channel differentiation information and/or the spatial point differentiation information comprises:
determining categories of feature channels and/or categories of spatial points respectively corresponding to the picture residual values based on the feature channel differentiation information and/or the spatial point differentiation information; and
determining the quantization precision parameters respectively corresponding to the picture residual values based on the categories of feature channels and/or the categories of spatial points;
wherein for different categories of feature channels and/or, different quantization precisions are adopted.

29. An apparatus for image decoding, comprising:
an entropy decoding module, configured to obtain feature channel differentiation information and/ spatial point differentiation information, and decode a picture bitstream to obtain quantized residual values;
a parameter construction module, configured to construct dequantization precision parameters respectively corresponding to the quantized residual values based on the feature channel differentiation information and/or the spatial point differentiation information;
a dequantization module, configured to, for any one of the quantized residual values, perform dequantization on the quantized residual value based on the dequantization precision parameter corresponding to the quantized residual value, to obtain reconstructed residual values; and
a synthesis transformation module, configured to perform a synthesis transform on the reconstructed residual values to obtain a reconstructed picture block.

30. An apparatus for image encoding, comprising:
an analysis transformation module, configured to perform an analysis transform on a to-be-processed picture block to obtain picture features;
a residual calculation module, configured to perform residual calculation on the picture features to obtain picture residual values and probability distribution parameters;
a parameter construction module, configured to construct quantization precision parameters respectively corresponding to feature channels based on feature channel differentiation information and/or spatial point differentiation information;
a quantization module, configured to perform quantization on the picture residual values based on the quantization precision parameters to obtain quantized residual values; and
an entropy encoding module, configured to write the probability distribution parameters and the quantized residual values into a picture bitstream.

31. A decoding device comprising one or more processors, one or more memories and a decoding program stored on the one or more memories and runnable on the one or more processors, wherein the one or more processors execute the decoding program to implement the method according to any one of claims 1 to 14.

32. An encoding device comprising one or more processors, one or more memories and an encoding program stored on the one or more memories and runnable on the one or more processors, wherein the one or more processors execute the encoding program to implement the method according to any one of claims 15 to 28.

33. A computer-readable storage medium storing an image decoding program and/or an image encoding program;
wherein when the image decoding program is executed, the method for image decoding according to any one of claims 1-14 is implemented, or when the image encoding program is executed, the method for image encoding according to any one of claims 15-28 is implemented.

34. A computer program product comprising a computer program, wherein the computer program, when executed by one or more processors, implements the method for image decoding according to any one of claims 1-14, or the method for image encoding according to any one of claims 15-28.
